(19) **Europäisches Patentamt / European Patent Office / Office européen des brevets**

(11) **EP 4 750 189 A1**

(12) **EUROPEAN PATENT APPLICATION**
published in accordance with Art. 153(4) EPC

(43) Date of publication:
**27.05.2026 Bulletin 2026/22**

(21) Application number: **23945407.7**

(22) Date of filing: **17.07.2023**

(51) International Patent Classification (IPC):
**H04W 72/0446** (2023.01)

(52) Cooperative Patent Classification (CPC):
**H04W 72/0446; H04W 72/1273; H04W 72/23**

(86) International application number:
**PCT/CN2023/107797**

(87) International publication number:
**WO 2025/015512 (23.01.2025 Gazette 2025/04)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Beijing Xiaomi Mobile Software Co., Ltd.**
**Beijing 100085 (CN)**

(72) Inventors:
• **WANG, Lei**
  **Beijing 100085 (CN)**
• **ZHAO, Qun**
  **Beijing 100085 (CN)**

(74) Representative: **Stöckeler, Ferdinand et al**
**Schoppe, Zimmermann, Stöckeler**
**Zinkler, Schenk & Partner mbB**
**Patentanwälte**
**Radlkoferstrasse 2**
**81373 München (DE)**

(54) **METHOD FOR PROCESSING TIME-FREQUENCY RESOURCES OF PDCCH CANDIDATES, APPARATUS, DEVICE, SYSTEM, AND MEDIUM**

(57)    Embodiments of the present disclosure provide a method for processing time-frequency resources of PDCCH candidates, an apparatus, a communication device, a communication system, and a storage medium. The method for processing time-frequency resources of PDCCH candidates comprises: a first base station receives first information sent by a terminal, wherein the first information is related to a first task, and the first task is used for the terminal to send a first signal to a first device; and the terminal receives the first information from the first device, wherein the first information is returned to the terminal by the first device on the basis of the first signal.

```
┌──────────┐                          ┌──────────────┐
│ Terminal │                          │    Access    │
│          │                          │   network    │
│          │                          │    device    │
└────┬─────┘                          └──────┬───────┘
     │        S2101: sending first information│
     │◄───────────────────────────────────────
  ┌──┴────────────────────────────┐
  │ S2102: determining the time-   │
  │ frequency resources of the PDCCH│
  │ candidates included in the first SS
  │ based on the first information.  │
  └──┬────────────────────────────┘
  ┌──┴────────────────────────────┐
  │ S2103: determining the time-   │
  │ frequency resource of the PDCCH │
  │ candidate included in the second SS
  │ based on the first information  │
  └──┬────────────────────────────┘
     │                                        │
```

FIG. 2

**Description**

**TECHNICAL FIELD**

The disclosure relates to the field of communication technologies, and particularly to a method and an apparatus for processing a time-frequency resource of a physical downlink control channel (PDCCH) candidate, a communication device, a communication system and a storage medium.

**BACKGROUND**

In order to improve a coverage and network throughput, a technology of subband full duplex is proposed in a duplex enhancement project.

For example, a carrier component (CC) may include some time domain units of one or more subbands (SBs). In some time domain units of the CC, some SBs are configured as uplink (UL) subbands and some subbands are configured as downlink (DL) subbands. In this way, a subband full duplex (SBFD) time domain unit is generated in a time domain.

**SUMMARY**

Embodiments of the disclosure provide a method and an apparatus for processing a time-frequency resource of a physical downlink control channel (PDCCH) candidate, a communication device and a storage medium.

According to a first aspect of embodiments of the disclosure, there is provided a method for processing a time-frequency resource of a physical downlink control channel (PDCCH) candidate, including:

receiving, by a terminal, first information, in which the first information indicates time-frequency resources of a search space (SS) set,
a time domain unit where one or more first SSs in the SS set are located is a subband full duplex (SBFD) time domain unit; and determining a time-frequency resource of a PDCCH candidate included in the one or more first SSs based on the first information.

According to a second aspect of embodiments of the disclosure, there is provided a method for processing a time-frequency resource of a PDCCH candidate, including:

sending, by an access network device, first information, in which the first information at least indicates a time-frequency resource of a PDCCH candidate included in an SS set; and
a time domain unit where one or more first SSs in the SS set are located is a subband full duplex (SBFD) time domain unit.

According to a third aspect of embodiments of the disclosure, there is provided a method for processing a time-frequency resource of a PDCCH candidate, including:

executing, by a terminal, the method for processing the time-frequency resource of the PDCCH candidate provided by any technical solution in the first aspect; and
executing, by an access network device, the method for processing the time-frequency resource of the PDCCH candidate provided by any technical solution in the second aspect.

According to a fourth aspect of embodiments of the disclosure, there is provided a terminal, including:

a receiving module, configured to receive first information, in which the first information indicates time-frequency resources of an SS set, a time domain unit where one or more first SSs in the SS set are located is a subband full duplex (SBFD) time domain unit; and
a processing module, configured to determine a time-frequency resource of a PDCCH candidate included in the one or more first SSs based on the first information.

According to a fifth aspect of embodiments of the disclosure, there is provide an access network device, including:
a sending module, configured to send first information, in which the first information at least indicates a time-frequency resource of a PDCCH candidate included in an SS set; a time domain unit where one or more first SSs in the SS set are located is a subband full duplex (SBFD) time domain unit.

According to a sixth aspect of embodiments of the disclosure, there is provided a communication device, including:

one or more processors;
in which the processor is configured to call instructions to enable the communication device to execute the method for processing a time-frequency resource of a PDCCH candidate provided in the first aspect and/or the second aspect.

According to a sixth aspect of embodiments of the disclosure, there is provided a storage medium for storing instructions. When the instructions are executed on a communication device, the communication device is caused to execute the method for processing a time-frequency resource of a PDCCH candidate provided in the first aspect and/or the second aspect.

With the technical solution provided by embodiments of the disclosure, in such way, more time-frequency resources of the PDCCH candidates may be used for the PDCCH transmission.

It should be understood that both the above general description and the following detailed description are exemplary and explanatory only, and are not restrictive of embodiments of the disclosure.

## BRIEF DESCRIPTION OF THE DRAWINGS

The accompanying drawings, which are incorporated in and form a part of the specification, illustrate embodiments of the disclosure and serve to explain the principles of embodiments of the disclosure together with the description.

FIG. 1A is a schematic diagram illustrating an architecture of a communication system according to an exemplary embodiment.
FIG. 1B is a schematic diagram illustrating a SBFD symbol according to an exemplary embodiment.
FIG. 1C is a schematic diagram illustrating a SBFD symbol according to an exemplary embodiment.
FIG. 1D is a schematic diagram illustrating resource configuration according to an exemplary embodiment.
FIG. 1E is a schematic diagram illustrating resource configuration according to an exemplary embodiment.
FIG. 1F is a schematic diagram illustrating resource configuration according to an exemplary embodiment.
FIG. 1G is a schematic diagram illustrating resource configuration according to an exemplary embodiment.
FIG. 1H is a schematic diagram illustrating resource configuration according to an exemplary embodiment.
FIG. 1I is a schematic diagram illustrating resource configuration according to an exemplary embodiment.
FIG. 1J is a schematic diagram illustrating resource configuration according to an exemplary embodiment.
FIG. 1K is a flow chart illustrating a method for processing a time-frequency resource of a physical downlink control channel (PDCCH) candidate according to an exemplary embodiment.
FIG. 2 is a flow chart illustrating a method for processing a time-frequency resource of a PDCCH candidate according to an exemplary embodiment.
FIG. 3 is a flow chart illustrating a method for processing a time-frequency resource of a PDCCH candidate according to an exemplary embodiment.
FIG. 4 is a flow chart illustrating a method for processing a time-frequency resource of a PDCCH candidate according to an exemplary embodiment.
FIG. 5 is a block diagram illustrating a terminal according to an exemplary embodiment.
FIG. 6 is a block diagram illustrating an access network device according to an exemplary embodiment.
FIG. 7 is a block diagram illustrating a communication device according to an exemplary embodiment.
FIG. 8 is a block diagram illustrating a communication device according to an exemplary embodiment.

## DETAILED DESCRIPTION

Embodiments of the disclosure provide a method and an apparatus for processing a time-frequency resource of a physical downlink control channel (PDCCH) candidate, a communication device, a communication system and a storage medium.

With the development of technologies, methods related to a search space (SS) are proposed to improve a probability that the time-frequency resource of the PDCCH candidate corresponding to the SS may be used.

In a first aspect, embodiments of the disclosure provide a method for processing a time-frequency resource of a PDCCH. The method includes:

receiving, by a terminal, first information, in which the first information indicates time-frequency resources of a SS set, a time domain unit where one or more first SSs in the SS set are located is a subband full duplex (SBFD) time domain unit; and determining a time-frequency resource of a PDCCH candidate included in the one or more first SSs based on the first information.

Based on the above solution, in a case that the time domain unit of the one or more SSs in the SS set is the SBFD time domain unit, the time-frequency resource of the PDCCH candidate included in the first SS may be determined in a corresponding way based on the first information and a UL frequency domain range and a DL frequency domain range corresponding to the time domain unit of the SBFD. The time-frequency resource of the PDCCH candidate may be used for a PDCCH transmission in a case that the time-frequency resource of the PDCCH candidate is not occupied by other signals or channels. In this way, a probability of the time-frequency resource of the PDCCH candidate being used for the PDCCH transmission may be improved.

In combination with some embodiments of the first aspect, the first information includes at least one of:

configuration information of a control resource set (CORESET) with an index m; a value of m being a positive integer; configuration information of an SS set associated with the CORESET; or

a frequency domain range available for a DL transmission on a carrier component (CC) in the SBFD time domain unit; in which the configuration information of the CORESET indicates that the first SS occupies a number Z1 of time domain units in a time domain;

the configuration information of the SS set indicates that a number of PDCCH candidates with an aggregation level A1 included in the first SS is X1, and indexes of the number X1 of PDCCH candidates are 0 to X1-1;

time-frequency resources of the PDCCH candidates with the aggregation level A1 include a number A1 of control channel elements (CCEs);

A1 is a positive integer;

X1 is a positive integer; and

Z1 is one of 1, 2 and 3.

In combination with some embodiments of the first aspect, the method also includes:

determining an index k of a time slot where the first SS is located based on the first information;

determining an index of a CCE included in each PDCCH candidate located on the time slot with the index k based on the index k of the time slot where the first SS is located and an identification of the terminal;

determining a time-frequency resource of any CCE included in the first SS based on the first information; and

determining the time-frequency resources of the number X1 of PDCCH candidates based on the index of the CCE included in each PDCCH.

Based on the above solution, firstly, the index of the CCE is determined based on the first information, the time slot where the first SS is located and an identification of a terminal. The time-frequency resource of the CCE is determined based on the index of the CCE. Finally, the PDCCH candidate is determined based on the time-frequency resource of the CCE. Thus, an implementation of determining the PDCCH candidate is presented.

In combination with some embodiments of the first aspect, a time domain unit where one or more second SSs in the SS set are located is a non-SBFD time domain unit, and a number of PDCCH candidates with an aggregation level A2 included in the second SS is X2;

the configuration information of the CORESET indicates that the second SS in the SS set occupies a number Z2 of time domain units in the time domain;

A2 is a positive integer;

X2 is a positive integer;

Z2 is one of 1, 2 and 3;

A2 is the same as or different from A1; and/or

X2 is the same as or different from X1; and/or

Z2 is the same as or different from Z1.

Based on the above solution, the SS set may include a first SS and a second SS, the time domain unit of the first SS may be located in the SBFD time domain unit, and the time domain unit of the second SS may be located in the non-SBFD time domain unit. The non-SBFD time domain unit may be a time domain unit that is not simultaneously mapped to uplink (UL) and downlink (DL) frequency domain resources. In this case, the configuration information of the CORESET included in the first information may include at least one of the above contents.

In combination with some embodiments of the first aspect, the SBFD time domain unit is a time domain unit including a DL subband and a UL subband in a frequency domain; a non-SBFD time domain unit is a time domain unit not including a DL subband and a UL subband in the frequency domain.

Based on the above solution, the subband is a unit of the frequency domain resource. However, the DL subband may be replaced by a DL frequency domain resource in a detailed implementation, the UL subband may replace the UL frequency domain resource. In detail, the resource may be flexibly configured based on a requirement.

In combination with some embodiments of the first aspect, the SBFD time domain unit includes a guard band (GB) in the frequency domain, the GB is located between the DL subband and the UL subband.

Based on the above solution, in order to reduce an adjacent band interference, the GB is set between the UL subband and the DL subband, which may improve the communication quality of the SBFD time domain unit.

In combination with some embodiments of the first aspect, a first manner is used to determine the time-frequency resource of the PDCCH candidate included in the first SS, in which the first manner includes a non-interleaving manner; and

a second manner is used to determine the time-frequency resource of the PDCCH candidate included in the second SS, in which the second manner is one of an interleaving manner and the non-interleaving manner, and the configuration information of the CORESET also indicates the second manner.

Based on the above solution, in order to realize that the SS may reserve more PDCCH candidates for transmitting downlink control information (DCI) corresponding to the PDCCH in the SBFD time domain unit, the first manner is employed for the first SS. The first manner includes the non-interleaving manner. The non-interleaving manner may enable the frequency domain resources of the first SS distributed in the frequency domain, thus reducing a phenomenon that the first SS is scattered in the SBFD time domain unit and there is a PDCCH candidate which enters the UL subband of the SBFD, thus increasing the probability that the PDCCH candidate may be used for DCI transmission.

In combination with some embodiments of the first aspect, the first information is used to enable a frequency domain range of the first SS in a first frequency domain range and to enable that a first condition is met when the CCE of the first SS is mapped to a resource element group (REG).

Based on the above solution, when the CORESET, SS and/or CCE is configured, the first information is configured based on the first condition, such that a more accurate PDCCH candidate may be used for the DCI transmission.

In combination with some embodiments of the first aspect, a device identification of a reader also includes a second part.

In combination with some embodiments of the first aspect, the first frequency domain range is: a frequency domain range of a bandwidth part (BWP) to which the CORESET belongs or a common frequency resource (CFR) of a multicast broadcast service (MBS), for the DL transmission in the SBFD time domain unit.

Based on the above solution, the first frequency domain range is located in the frequency domain range of the DL, which is exactly the same as a direction of the PDCCH transmission, thus reducing a probability that the PDCCH candidate located in a frequency domain range of UL transmission may not be used for the DCI transmission.

In combination with some embodiments of the first aspect, the first information is used to enable a frequency domain range of the second SS in a second frequency domain range, and to enable that a second condition is met when the CCE of the second SS is mapped to an REG.

Based on the above solution, in a case that the second SS is not located in the SBFD time domain unit, the frequency domain resource may be determined in the interleaving manner or the non-interleaving manner, depending on a current network environment. For example, in the current network environment, there are multiple interferences. In order to obtain a frequency domain gain, employing the interleaving manner may be indicated by the configuration information of the CORESET, otherwise, employing the non-interleaving manner may be indicated.

In combination with some embodiments of the first aspect, the first information includes:

a first configuration for configuration of the first SS; and
a second configuration for configuration of the second SS.

Based on the above solution, since the first SS and the second SS are in different time domain units, the first SS and the second SS are indicated by two sets of configurations respectively. Thus, it may be ensured that even the PDCCH candidates distributed in the SBFD time domain units may also be more used for the DCI transmission.

In combination with some embodiments of the first aspect, for determining the time-frequency resource of the PDCCH candidate by employing an interleaving manner or a non-interleaving manner, a frequency domain range of the first SS indicated by the first configuration is different from a frequency domain range of the second SS indicated by the second configuration.

Based on the above solution, in this case, the PDCCH candidate in the first SS may also be determined by employing the interleaving manner or the non-interleaving manner. However, in such case, the frequency domain ranges of the first SS and the second SS are different to ensure that more of the PDCCH candidates in the first SS are not located in a range of the UL transmission, thus ensuring that more of the PDCCH candidates may be used for the DCI.

In combination with some embodiments of the first aspect, a frequency domain range of the first SS is indicated by a first bit bitmap of the first configuration, in which one bit in the first bit bitmap indicates whether a resource block group (RBG) including six resource blocks (RBs) belongs to the frequency domain range of the first SS.

Based on the above solution, the first configuration includes the first bit map. One bit in the first bit bitmap corresponds to an RBG, and a bit value of such bit may be used to indicate whether the RBG is located in the frequency domain range of the first SS.

In combination with some embodiments of the first aspect, a frequency domain range of the second SS is indicated by a second bit bitmap of the second configuration, in which one bit in the second bit bitmap indicates whether an RBG includes six RBs belongs to the frequency domain range of the second SS.

Based on the above solution, the second configuration includes the first bit map. One bit in the first bit bitmap corresponds to an RBG, and a bit value of such bit may be used to indicate whether the RBG is located in the frequency domain range of the second SS.

In combination with some embodiments of the first aspect, the frequency domain range of the first SS of the first configuration is different from the frequency domain range of the second SS of the second configuration;

each RB of one RBG is located in the frequency domain range of the first SS, and a bit in the first bit bitmap has a first value or a second value;

each RB of one RBG is located in the frequency domain range of the second SS, and a bit in the second bit bitmap has a first value or a second value;

at least one RB of one RBG is located outside the frequency domain range of the first SS, and a bit in the first bit bitmap has a second value;

at least one RB of one RBG is located outside the frequency domain range of the second SS, and a bit in the second bit bitmap has a second value;

a first RB in an RBG corresponding to a first bit of the first bit bitmap is a first RB in a second frequency domain range; and

a first RB in an RBG corresponding to a first bit of the second bit bitmap is the first RB in the second frequency domain range;

in which the second value is different from the first value.

Based on the above solution, the first value may be "0" and the second value may be "1", or the first value may be "1" and the second value may be "0". The above presents at least two meanings of different bit values of each bit in the first bit bitmap and the second bit bitmap. Thus, the configuration and interpretation of the first information may be flexibly performed as required.

In combination with some embodiments of the first aspect, RBs included in one RBG are continuously distributed in a frequency domain; or, RBs included in one RBG is capable of being discontinuously distributed in a frequency domain.

Here, the RBs included in the RBG are distributed discontinuously in the frequency domain, which may be understood as follows: the RBs included in the RBG are distributed discretely in the frequency domain.

The first SS and the second SS are configured respectively by the first configuration and the second configuration. In this case, multiple RBs in one RBG may be continuously distributed in the frequency domain or discontinuously distributed in the frequency domain, such that the flexibility of configuration of the frequency domain resources of the first SS and the second SS is high.

In combination with some embodiments of the first aspect, for the interleaving manner, the first condition is that:

$N_{REG}^{CORESET,3}/L_3$ is a positive integer;

$C_3 = N_{REG}^{CORESET,3}/(L_3 R_3)$ is a positive integer; and

for the non-interleaving manner, the first condition is that:

$N_{REG}^{CORESET,3}/6$ is a positive integer,

where $N_{REG}^{CORESET,3}$ represents a number of REGs included in the time-frequency resources of the first SS;

$$N_{REG}^{CORESET,3} = N_{RB}^{CORESET,3} N_{symb}^{CORESET};$$

$N_{RB}^{CORESET,3}$ represents a number of RBs included in the frequency domain range of the first SS;

$N_{symb}^{CORESET}$ represents the number Z1 of time domain units included in the first SS;

$L_3$ represents a size of an REG bundle of the first SS; and

$R_3$ represents a size of an interleaver of the first SS.

Based on the above solution, the first condition may be met when the time-frequency domain resource of the PDCCH candidate located in the first SS is determined by employing the interleaving manner and the second interleaving manner, such that more PDCCH candidates are located in the DL frequency domain range and may be used for the DCI transmission.

In combination with some embodiments of the first aspect, for the interleaving manner, the second condition is that:

$N_{REG}^{CORESET,3}/L_3$ is a positive integer;

$C_3 = N_{REG}^{CORESET,3}/(L_3 R_3)$ is a positive integer; and

for the non-interleaving manner, the second condition is that:

$N_{REG}^{CORESET,3}/6$ is a positive integer,

where $N_{REG}^{CORESET,3}$ represents a number of REGs included in the time-frequency resources of the second SS;

$$N_{REG}^{CORESET,3} = N_{RB}^{CORESET,3} N_{symb}^{CORESET};$$

$N_{RB}^{CORESET,3}$ represents a number of RBs included in the frequency domain range of the second SS;

$N_{symb}^{CORESET}$ represents the number Z2 of time domain units included in the second SS;

$L_3$ represents a size of an REG bundle of the second SS; and

$R_3$ represents a size of an interleaver of the second SS.

Based on the above solution, the second condition may be met when the time-frequency domain resource of the PDCCH candidate located in the second SS is determined by employing the interleaving manner and the second interleaving manner, such that more PDCCH candidates are located in the DL frequency domain range and may be used for the DCI transmission.

In combination with some embodiments of the first aspect, for the interleaving manner, the first configuration indicates a preset size of an REG bundle of the first SS, and the first SS uses the preset size of the REG bundle; and/or, for the interleaving manner, the first configuration does not indicate the preset size of the REG bundle of the first SS, and the first SS uses a preset size of an REG bundle indicated by the second configuration.

In this way, the preset size of the interleaver is configured by the first configuration and the second configuration, such that more PDCCH candidates in the first SS are located in the DL frequency domain range.

In combination with some embodiments of the first aspect, the second configuration includes a frequency domain range configuration of the second SS;

each RB of one RBG is located in the frequency domain range of the second SS, and a bit in the second bit bitmap has a first value;

at least one RB of one RBG is located outside the frequency domain range of the second SS, and a bit in the second bit bitmap has a second value,

a first RB in an RBG corresponding to a first bit of the second bit bitmap is a first RB in the second frequency domain range; and

the second value is different from the first value.

Based on the above solution, in this case, the frequency domain range of the first SS may not be configured in the first configuration, and the frequency domain range of the first SS may be a subset of the above first frequency domain range. In this case, the first information may be configured as above, such that more of the PDCCH candidates of the first SS may be located in the DL frequency domain range, such that the PDCCH candidate may be used for the PDCCH transmission.

In combination with some embodiments of the first aspect, in a case that the second bit bitmap has the bit with the first value and a third condition is met, an RBG corresponding to the bit with the first value is located in the third frequency domain range;

in a case that the second bit bitmap has the bit with the first value and the third condition is not met, the RBG corresponding to the bit with the first value is not located in the third frequency domain range; and
in a case that the second bit bitmap has the bit with the second value, an RBG corresponding to the bit with the second value is not located in the third frequency domain range.

Based on the above solution, when the configuration of the first information meets the third condition, the PDCCH candidates are more located in the DL frequency domain range.

In combination with some embodiments of the first aspect, the third condition is that the RBG corresponding to the bit with the first value in the second bit bitmap is located in a first frequency domain range; the first frequency domain range is: a frequency domain range of a BWP to which the CORESET belongs or a CFR of a MBS, for the DL transmission in the SBFD time domain unit.

Based on the above solution, a configuration of the first information meeting the third condition is provided, such that more of the PDCCH candidates of the first SS may be located in the DL frequency domain range.

In combination with some embodiments of the first aspect, in a case that the second bit bitmap has the bit with the first value and a fourth condition is met, an RB belonging to a first frequency domain range in an RBG corresponding to the bit with the first value is located in the fourth frequency domain range;

in a case that the second bit bitmap has the bit with the first value and the fourth condition is not met, the RBG corresponding to the bit with the first value is not located in the fourth frequency domain range; and
in a case that the second bit bitmap has the bit with the second value, the RBG corresponding to the bit with the second value is not located in the fourth frequency domain range.

Based on the above solution, a configuration of the first information meeting the fourth condition is provided, such that more of the PDCCH candidates of the second SS may be located in the DL frequency domain range.

In combination with some embodiments of the first aspect, the fourth condition is:
some or all of the RBG corresponding to the bit with the first value in the second bit bitmap is located in the first frequency domain range, in which the first frequency domain range is: a frequency domain range of a BWP to which the CORESET belongs or a CFR of an MBS, for the DL transmission in the SBFD time domain unit.

In combination with some embodiments of the first aspect, the fourth condition is:
some or all of the RBG corresponding to the bit with the first value in the second bit bitmap is located in the first frequency domain range, in which the first frequency domain range is: a frequency domain range of a BWP to which the CORESET belongs or a CFR of an MBS, for the DL transmission in the SBFD time domain unit.

In combination with some embodiments of the first aspect, the number of REGs included in the first SS does not exceed $N_{REG}^{CORESET,3}$;

$N_{REG}^{CORESET,3}$ represents a maximum number of REGs included in the first SS;

$$N_{REG}^{CORESET,3} = N_{RB}^{CORESET,3} N_{symb}^{CORESET};$$

$N_{RB}^{CORESET,3}$ represents a number of RBs included in the third frequency domain range or the fourth frequency domain range; and

$N_{symb}^{CORESET}$ represents the number Z1 of time domain units occupied by the first SS.

In combination with some embodiments of the first aspect, for the interleaving manner, the number of REGs of the first SS is $N_{REG}^{CORESET,4}$, and $N_{REG}^{CORESET,4}$ has the following characteristic that:

$N_{REG}^{CORESET,4}/L_4$ is a maximum positive integer in a value range of $N_{REG}^{CORESET,4}$;

$$C_4 = N_{REG}^{CORESET,4}/(L_4 R_4)$$ is a maximum positive integer in the value range of $N_{REG}^{CORESET,4}$,

where $L_4$ represents a size of the REG bundle of the first SS, and $R_4$ represents a size of the interleaver of the first SS; and/or

for the non-interleaving manner, the number of REGs of the first SS is $N_{REG}^{CORESET,5}$, and $N_{REG}^{CORESET,5}$ has the following characteristic that:

$$N_{REG}^{CORESET,5}/6$$ is a maximum positive integer in a value range of $N_{REG}^{CORESET,5}$.

Based on the above solution, a detailed fourth condition which the first information needs to meet is given, in which the first information enables more of the PDCCH candidates located in the DL frequency domain range.

In combination with some embodiments of the first aspect, time-frequency resources of a number $N_{REG}^{CORESET,4}$ of REGs are: time-frequency resources of remained REGs after removing a number N4 of REGs with maximum REG indexes or a number N4 of REGs with minimum REG indexes from a number $N_{REG}^{CORESET,3}$ of REGs; and

time-frequency resources of a number $N_{REG}^{CORESET,5}$ of REGs are: time-frequency resources of remained REGs after removing a number N5 of REGs with maximum REG indexes or a number N5 of REGs with minimum REG indexes from the number $N_{REG}^{CORESET,3}$ of REGs.

In combination with some embodiments of the first aspect, the first information ensures that more of the PDCCH candidates of the first SS and the second SS are located in the DL frequency domain range by carrying two sets of configurations, and the mapping rule between the REG and the CCE of the first SS is different from that between the REG and the CCE of the second SS. Alternatively, the mapping rule between the REG and the CCE of the first SS are the same as that between the REG and the CCE of the second SS, both of which are supported. In this case, the access network equipment may be flexibly configured based on a network state.

In combination with some embodiments of the first aspect, the time domain unit where the first SS is located is the SBFD time domain unit, and the time domain unit where the second SS is located is the non-SBFD time domain unit.

In a second aspect, embodiments of the disclosure provide a method for processing a time-frequency resource of a physical downlink control channel (PDCCH) candidate, including:

sending, by an access network device, first information, in which the first information at least indicates a time-frequency resource of a PDCCH candidate included in an SS set; and
a time domain unit where one or more first SSs in the SS set are located is a subband full duplex (SBFD) time domain unit, a time-frequency resource of a PDCCH candidate included in the one or more first SSs is determined based on the first information.

In combination with some embodiments of the second aspect, the first information includes at least one of:

configuration information of a CORESET with an index m; a value of m being a positive integer;
configuration information of an SS set associated with the CORESET; or
a frequency domain range available for a DL transmission on a CC in the SBFD time domain unit;
in which the configuration information of the CORESET indicates that the first SS occupies a number Z1 of time domain units in a time domain;
the configuration information of the SS set indicates that a number of PDCCH candidates with an aggregation level A1 included in the first SS is X1, and indexes of the number X1 of PDCCH candidates are 0 to X1-1;
time-frequency resources of the PDCCH candidates with the aggregation level A1 include a number A1 of control channel elements (CCEs);
A1 is a positive integer;
X1 is a positive integer; and
Z1 is one of 1, 2 and 3.

In combination with some embodiments of the second aspect, the method also includes:

determining an index k of a time slot where the first SS is located based on the first information;
determining an index of a CCE included in each PDCCH candidate located on the time slot with the index k based on the index k of the time slot where the first SS is located and an identification of the terminal;
determining a time-frequency resource of any CCE included in the first SS based on the first information; and
determining the time-frequency resources of the number X1 of PDCCH candidates based on the index of the CCE included in each PDCCH.

In combination with some embodiments of the second aspect, a time domain unit where one or more second SSs in the SS set are located is a non-SBFD time domain unit, and a number of PDCCH candidates with an aggregation level A2 included in the second SS is X2;

the configuration information of the CORESET indicates that the second SS in the SS set occupies a number Z2 of time domain units in the time domain;
A2 is a positive integer;
X2 is a positive integer;
Z2 is one of 1, 2 and 3;
A2 is the same as or different from A1; and/or
X2 is the same as or different from X1; and/or
Z2 is the same as or different from Z1.

In combination with some embodiments of the second aspect, the SBFD time domain unit is a time domain unit including a DL subband and a UL subband in a frequency domain; and/or
a non-SBFD time domain unit is a time domain unit not including the DL subband and the UL subband in the frequency domain.

In combination with some embodiments of the second aspect, the SBFD time domain unit includes a guard band (GB) in the frequency domain, and the GB is located between the DL subband and the UL subband.

In combination with some embodiments of the second aspect, a first manner is used to determine the time-frequency resource of the PDCCH candidate included in the first SS, in which the first manner includes a non-interleaving manner; and
a second manner is used to determine the time-frequency resource of the PDCCH candidate included in the second SS, in which the second manner is one of an interleaving manner and the non-interleaving manner, and the configuration information of the CORESET also indicates the second manner.

In combination with some embodiments of the second aspect, the first information is used to enable a frequency domain range of the first SS in a first frequency domain range and to enable that a first condition is met when the CCE of the first SS is mapped to an REG.

In combination with some embodiments of the second aspect, the first frequency domain range is a frequency domain range of a BWP to which the CORESET belongs or a CFR of an MBS, for the DL transmission in the SBFD time domain unit.

In combination with some embodiments of the second aspect, the first information is used to enable a frequency domain range of the second SS in a second frequency domain range, and to enable that a second condition is met when the CCE of the second SS is mapped to an REG.

In combination with some embodiments of the second aspect, the second frequency domain range is a frequency domain range of a BWP to which the CORESET belongs or a CFR of an MBS.

In combination with some embodiments of the second aspect, the first information includes:

a first configuration for configuration of the first SS; and
a second configuration for configuration of the second SS.

In combination with some embodiments of the second aspect, for determining the time-frequency resource of the PDCCH candidate by employing an interleaving manner or a non-interleaving manner, a frequency domain range of the first SS indicated by the first configuration is different from a frequency domain range of the second SS indicated by the second configuration.

In combination with some embodiments of the second aspect, a frequency domain range of the first SS is indicated by a first bit bitmap of the first configuration, in which one bit in the first bit bitmap indicates whether an RBG including six RBs belongs to the frequency domain range of the first SS.

In combination with some embodiments of the second aspect, a frequency domain range of the second SS is indicated by a second bit bitmap of the second configuration, in which one bit in the second bit bitmap indicates whether an RBG includes six RBs belongs to the frequency domain range of the second SS.

In combination with some embodiments of the second aspect, the frequency domain range of the first SS of the first configuration is different from the frequency domain range of the second SS of the second configuration;

each RB of one RBG is located in the frequency domain range of the first SS, and a bit in the first bit bitmap has a first value or a second value;

each RB of one RBG is located in the frequency domain range of the second SS, and a bit in the second bit bitmap has a first value or a second value;

at least one RB of one RBG is located outside the frequency domain range of the first SS, and a bit in the first bit bitmap has a second value;

at least one RB of one RBG is located outside the frequency domain range of the second SS, and a bit in the second bit bitmap has a second value;

a first RB in an RBG corresponding to a first bit of the first bit bitmap is a first RB in a second frequency domain range; and

a first RB in an RBG corresponding to a first bit of the second bit bitmap is the first RB in the second frequency domain range;

in which, the second value is different from the first value.

In combination with some embodiments of the second aspect, RBs included in one RBG are continuously distributed in a frequency domain;

or

RBs included in one RBG is capable of being discontinuously distributed in a frequency domain.

In combination with some embodiments of the second aspect, for the interleaving manner, the first condition is that:

$N_{REG}^{CORESET,3}/L_3$  is a positive integer;

$C_3 = N_{REG}^{CORESET,3}/(L_3 R_3)$  is a positive integer; and

for the non-interleaving manner, the first condition is that:

$N_{REG}^{CORESET,3}/6$  is a positive integer,

where  $N_{REG}^{CORESET,3}$  represents a number of REGs included in the time-frequency resources of the first SS;

$$N_{REG}^{CORESET,3} = N_{RB}^{CORESET,3} N_{symb}^{CORESET},$$

$N_{RB}^{CORESET,3}$  represents a number of RBs included in the frequency domain range of the first SS;

$N_{symb}^{CORESET}$  represents the number Z1 of time domain units included in the first SS;

$L_3$ represents a size of an REG bundle of the first SS; and

$R_3$ represents a size of an interleaver of the first SS.

In combination with some embodiments of the second aspect, for the interleaving manner, the second condition is that:

$N_{REG}^{CORESET,3}/L_3$  is a positive integer;

$C_3 = N_{REG}^{CORESET,3}/(L_3 R_3)$  is a positive integer; and

for the non-interleaving manner, the second condition is that:

$N_{REG}^{CORESET,3}/6$  is a positive integer,

where $N_{REG}^{CORESET,3}$  represents a number of REGs included in the time-frequency resources of the second SS,

$$N_{REG}^{CORESET,3} = N_{RB}^{CORESET,3} N_{symb}^{CORESET},$$

$N_{RB}^{CORESET,3}$ represents a number of RBs included in the frequency domain range of the second SS;

$N_{symb}^{CORESET}$ represents the number Z2 of time domain units included in the second SS;

$L_3$ represents a size of an REG bundle of the second SS; and

$R_3$ represents a size of an interleaver of the second SS.

In combination with some embodiments of the second aspect, for the interleaving manner, the first configuration indicates a preset size of an REG bundle of the first SS, and the first SS uses the preset size of the REG bundle; and/or for the interleaving manner, the first configuration does not indicate the preset size of the REG bundle of the first SS, and the first SS uses a preset size of an REG bundle indicated by the second configuration.

In combination with some embodiments of the second aspect, for the interleaving manner, the first configuration indicates a preset size of an interleaver of the first SS, the first SS uses the preset size of the interleaver, and/or for the interleaving manner, the first configuration does not indicate the preset size of the interleaver of the first SS, and the first SS uses a preset size of an interleaver indicated by the second configuration.

In combination with some embodiments of the second aspect, the second configuration includes a frequency domain range configuration of the second SS;

each RB of one RBG is located in the frequency domain range of the second SS, and a bit in the second bit bitmap has a first value;

at least one RB of one RBG is located outside the frequency domain range of the second SS, and a bit in the second bit bitmap has a second value,

a first RB in an RBG corresponding to a first bit of the second bit bitmap is a first RB in the second frequency domain range; and

the second value is different from the first value.

In combination with some embodiments of the second aspect, in a case that the second bit bitmap has the bit with the first value and a third condition is met, an RBG corresponding to the bit with the first value is located in a third frequency domain range;

in a case that the second bit bitmap has the bit with the first value and the third condition is not met, the RBG corresponding to the bit with the first value is not located in the third frequency domain range; and

in a case that the second bit bitmap has the bit with the second value, an RBG corresponding to the bit with the second value is not located in the third frequency domain range.

In combination with some embodiments of the second aspect, the third condition is that the RBG corresponding to the bit with the first value in the second bit bitmap is located in a first frequency domain range.

In combination with some embodiments of the second aspect, in a case that the second bit bitmap has the bit with the first value and a fourth condition is met, an RB belonging to a first frequency domain range in an RBG corresponding to the bit with the first value is located in a fourth frequency domain range;

in a case that the second bit bitmap has the bit with the first value and the fourth condition is not met, the RBG corresponding to the bit with the first value is not located in the fourth frequency domain range; and

in a case that the second bit bitmap has the bit with the second value, the RBG corresponding to the bit with the second value is not located in the fourth frequency domain range.

In combination with some embodiments of the second aspect, the fourth condition is that:

some or all of the RBG corresponding to the bit with the first value in the second bit bitmap is located in the first frequency domain range.

In combination with some embodiments of the second aspect, the number of REGs included in the first SS does not exceed $N_{REG}^{CORESET,3}$;

$N_{REG}^{CORESET,3}$ represents a maximum number of REGs included in the first SS;

$$N_{REG}^{CORESET,3} = N_{RB}^{CORESET,3} N_{symb}^{CORESET};$$

$N_{RB}^{CORESET,3}$ represents a number of RBs included in the third frequency domain range or the fourth frequency domain range; and

$N_{symb}^{CORESET}$ represents the number Z1 of time domain units occupied by the first SS.

In combination with some embodiments of the second aspect, for the interleaving manner, the number of REGs of the first SS is $N_{REG}^{CORESET,4}$, and $N_{REG}^{CORESET,4}$ has the following characteristic that:

$N_{REG}^{CORESET,4}/L_4$ is a maximum positive integer in a value range of $N_{REG}^{CORESET,4}$;

$C_4 = N_{REG}^{CORESET,4}/(L_4 R_4)$ is a maximum positive integer in the value range of $N_{REG}^{CORESET,4}$, where $L_4$ represents a size of the REG bundle of the first SS, and $R_4$ represents a size of the interleaver of the first SS; and/or

for the non-interleaving manner, the number of REGs of the first SS is $N_{REG}^{CORESET,5}$, and $N_{REG}^{CORESET,5}$ has the following characteristic that:

$N_{REG}^{CORESET,5}/6$ is a maximum positive integer in a value range of $N_{REG}^{CORESET,5}$.

In combination with some embodiments of the second aspect, time-frequency resources of a number $N_{REG}^{CORESET,4}$ of REGs are: time-frequency resources of remained REGs after removing a number N4 of REGs with maximum REG indexes or a number N4 of REGs with minimum REG indexes from a number $N_{REG}^{CORESET,3}$ of REGs; and

time-frequency resources of a number $N_{REG}^{CORESET,5}$ of REGs are: time-frequency resources of remained REGs after removing a number N5 of REGs with maximum REG indexes or a number N5 of REGs with minimum REG indexes from the number $N_{REG}^{CORESET,3}$ of REGs.

In combination with some embodiments of the second aspect, a mapping rule between the REG and the CCE of the first SS is different from that between the REG and CCE of the second SS;
or
a mapping rule between the REG and the CCE of the first SS is the same as that between the REG and CCE of the second SS.

In combination with some embodiments of the second aspect, the time domain unit where the first SS is located is the SBFD time domain unit, and the time domain unit where the second SS is located is the non-SBFD time domain unit.

In a third aspect, a method for processing a time-frequency resource of a PDCCH candidate, including:

a terminal, configured to execute the method for processing the time-frequency resource of the PDCCH candidate in the technical solution of the first aspect; and
an access network device, configured to execute the method for processing the time-frequency resource of the PDCCH candidate in the technical solution of the second aspect.

In a fourth aspect, a terminal is provided, including:

a receiving module, configured to receive first information, in which the first information indicates time-frequency resources of an SS set,
a time domain unit where one or more first SSs in the SS set are located is a subband full duplex (SBFD) time domain unit; and a time-frequency resource of a PDCCH candidate included in the one or more first SSs is determined based on the first information.

In a fifth aspect, an access network device is provided, including:

a sending module, configured to send first information, in which the first information at least indicates a time-frequency resource of a PDCCH candidate included in an SS set;

a time domain unit where one or more first SSs in the SS set are located is an SBFD time domain unit; and a time-frequency resource of a PDCCH candidate included in the one or more first SSs is determined based on the first information.

In a sixth aspect, embodiments of the disclosure provide a communication device, including:

one or more processors;

in which the processor is configured to call instructions to enable the communication device to execute the method for processing a time-frequency resource of a PDCCH candidate of any one of alternative implementations described in the first aspect and/or the second aspect.

In a seventh aspect, embodiments of the disclosure provide a storage medium for storing instructions. When the instructions are executed on a communication device, the communication device is caused to execute the method for processing a time-frequency resource of a PDCCH candidate of any one of alternative technical solutions described in the first aspect and/or the second aspect.

In an eighth aspect, embodiments of the disclosure provide a program product. When the program product is executed by a communication device, the communication device is caused to execute the method for processing a time-frequency resource of a PDCCH candidate of any one of alternative implementations described in the first aspect or the second aspect or the third aspect.

In a ninth aspect, embodiments of the disclosure provide a computer program. When the computer program is run on a computer, the computer is caused to execute the method for processing a time-frequency resource of a PDCCH candidate of any one of alternative implementations described in the first aspect or the second aspect or the third aspect.

It may be understood that the above terminal, first device, access network device, communication device, communication system, storage medium, program product, computer program all used to perform the method disclosed in embodiments of the disclosure. Therefore, for the beneficial effects achievable by the disclosure reference may be made to the beneficial effects of the corresponding methods, which may not be repeated here.

Embodiments of the disclosure provide the method and the apparatus for processing a time-frequency resource of a PDCCH candidate, a communication device, a communication system, and a storage medium. In some embodiments, the terms "a method for processing a time-frequency resource of a PDCCH candidate", "information processing method", and "a time-frequency resource processing method of a PDCCH candidate" may be used interchangeably, and the terms "information indication apparatus", "information processing apparatus", and "information transmission apparatus" may be also used interchangeably

Embodiments of the disclosure are not exhaustive, but are only illustrative, and are not intended to be a detailed limitation on the protection scope of the disclosure. In the absence of contradiction, each step in a certain embodiment may be implemented as an independent embodiment, and respective steps may be arbitrarily combined. For example, a solution after removing some steps in a certain embodiment may also be implemented as an independent embodiment, and the order of the steps in a certain embodiment may be arbitrarily exchanged. In addition, the alternative implementations in a certain embodiment may be arbitrarily combined; in addition, respective embodiments may be arbitrarily combined, for example, some or all steps of different embodiments may be arbitrarily combined, and a certain embodiment may be arbitrarily combined with the alternative implementations of other embodiments.

In various embodiments of the disclosure, unless otherwise specified or there is a logical conflict, the terms, and/or descriptions between embodiments are consistent and may be referred to each other, and the technical features in different embodiments may be combined to form a new embodiment based on their internal logical relationships.

The terms used in embodiments of the disclosure are only for the purpose of describing specific embodiments and are not intended to limit the disclosure.

In embodiments of the disclosure, unless otherwise specified, elements expressed in the singular form, such as "a", "an", "the", "above", "said", "aforementioned", "this", etc., may mean "one and only one", or "one or more", "at least one", etc. For example, when using articles such as "a", "an", "the" in English translation, the noun after the article may be understood as a singular expression or a plural expression.

In embodiments of the disclosure, "a plurality of/multiple" means two or more.

In some embodiments, the terms "at least one of", "one or more", "a plurality of", "multiple" etc. may be used interchangeably.

In some embodiments, the descriptions such as "at least one of A, B", "A and/or B", "in one case, A; in another case, B", "in response to one case, A; in response to another case, B", etc. may include the following technical solutions according to situations: in some embodiments, A (A is executed independently of B); in some embodiments, B (B is executed independently of A); in some embodiments, one is selected from A and B to be executed (A and B are selectively executed); in some embodiments, A and B (both A and B are executed). When there are more branches such as A, B, C, etc., the above is applicable.

In some embodiments, the descriptions such as "A or B", etc. may include the following technical solutions based on situations: in some embodiments, A (A is executed independently of B); in some embodiments, B (B is executed independently of A); in some embodiments, one is selected from A and B to be executed (A and B are selectively executed). When there are more branches such as A, B, C, etc., the above is applicable.

The prefixes such as "first" and "second" in embodiments of the disclosure are only used to distinguish different descriptive objects, and do not constitute restrictions on the position, order, priority, quantity or content of the descriptive objects. For the statement of the descriptive objects, reference may be made to the description in the context of the claims or embodiments, and it should not constitute redundant restrictions due to the use of prefixes. For example, if the descriptive object is "field", the ordinal number before the "field" in the "first field" and the "second field" does not limit the position or order between the "fields", and the terms "first" and "second" do not limit whether the "fields" they modify are in the same message, nor do they limit the order of the "first field" and the "second field". For another example, if the descriptive object is "level", the ordinal number before the "level" in the "first level" and the "second level" does not limit the priority between the "levels". For another example, a number of descriptive objects is not limited by the ordinal number, and may be one or more. Taking the "first apparatus" as an example, a number of "apparatuses" may be one or more. In addition, the objects modified by different prefixes may be the same or different. For example, if the descriptive object is "an apparatus", then the "first apparatus" and the "second apparatus" may be the same apparatus or different apparatuses, and their types may be the same or different. For another example, if the descriptive object is "information", then the "first information" and the "second information" may be the same information or different information, and their contents may be the same or different.

In some embodiments, "including A", "containing A", "used to indicate A", and "carrying A" may be interpreted as directly carrying A or indirectly indicating A.

In some embodiments, the terms such as "in response to...", "in response to determining...", "in the case of/that...", "at the time of...", "when...", "if...", "in case of/that...", etc. may be used interchangeably.

In some embodiments, the terms such as "greater than", "greater than or equal to", "not smaller than", "more than", "more than or equal to", "not less than", "higher than", "higher than or equal to", "not lower than", and "above" may be replaced with each other, and the terms such as "smaller than", "smaller than or equal to", "not greater than", "less than", "less than or equal to", "no more than", "lower than", "lower than or equal to", "not higher than", and "below" may be replaced with each other.

In some embodiments, the apparatus and device, etc. may be interpreted as physical or virtual, and their names are not limited to the names used in embodiments. The terms such as "apparatus", "equipment", "device", "circuit", "network element", "node", "function", "unit", "section", "system", "network", "chip", "chip system", "entity", and "subject" may be used interchangeably.

In some embodiments, the term such as "network" may be interpreted as an apparatus (e.g., an access network device, a core network device, etc.) included in the network.

In some embodiments, "access network device (AN device)", "radio access network device (RAN device)", "base station (BS)", radio base station", fixed station", node", "access point", "transmission point (TP)", "reception point, (RP)", "transmission/reception point (TRP)", "panel", "antenna panel", "antenna array", "cell", "macro cell", "small cell", "femto cell", "pico cell", "sector", "cell group", "serving base station", "carrier", "component carrier" and "bandwidth part (BWP)" may be used interchangeably.

In some embodiments, the "terminal" or "terminal device" may be referred as "user equipment (UE)", "user terminal", "mobile station (MS)", "mobile UE (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" and the like.

In some embodiments, an access network device, a core network device, or a network device may be replaced by a terminal. For example, a structure where communication between the access network device, the core network device, or the network device and the terminal is replaced with communication among multiple terminals (e.g., device-to-device (D2D), or vehicle-to-everything (V2X), etc.) may also be applied to respective embodiments of the disclosure. In this case, the terminal may be set to have all or some of functions of the access network device. In addition, terms such as "uplink (UL)" and "downlink (DL)" may be replaced with language (such as, "sidelink") corresponding to communication between the terminals. For example, a UL channel or a DL channel may be replaced with a sidelink channel; and a UL or a DL may be replaced with a sidelink.

In some embodiments, the terminal may be replaced with the access network device, the core network device, or the network device. In this case, the access network device, the core network device, or the network device may be set to have all or some of functions of the terminal.

In some embodiments, obtaining data, information, etc. shall comply with laws and regulations of a located country.

In some embodiments, data, information, etc. may be obtained after agreed by a user.

In addition, each element, each row, or each column in tables of embodiments of the disclosure may be implemented as an independent embodiment. Any combination of elements, rows, or columns may also be implemented as an independent embodiment.

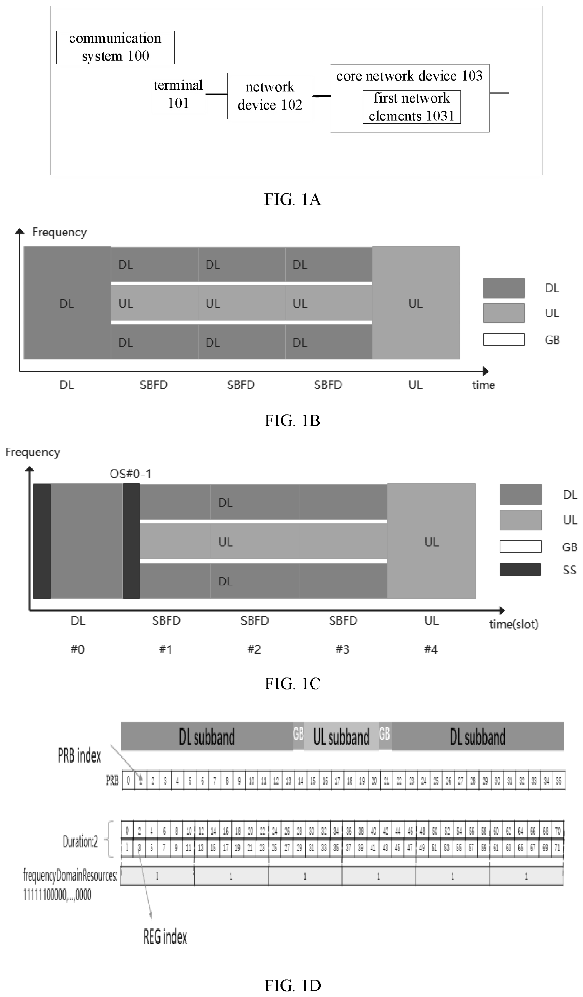

FIG. 1A is a schematic diagram illustrating an architecture of a communication system according to an exemplary embodiment.

As illustrated in FIG. 1A, the communication system 100 includes a terminal 101, a network device 102, and a core network device 103.

In some embodiments, the terminal 101, for example, may include at least one of a mobile phone, a wearable device, an Internet of Things device, a car with a communication function, a smart car, a Pad, a computer with a wireless receiving and sending function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, or a wireless terminal in smart home, but is not limited herein.

In some embodiments, the access network device may be, such as, a node or device that accesses a terminal to a wireless network. The access network device may include at least one of an evolved NodeB (eNB), a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, or an access node in a wireless fidelity (WiFi) system, but is not limited herein.

In some embodiments, the technical solution of the disclosure may be applicable to an Open RAN architecture. In this case, the interfaces between or within the access network devices involved in embodiments of the disclosure may become internal interfaces of the Open RAN, and the processes and information interactions between these internal interfaces may be implemented through software or programs.

In some embodiments, the access network device may include a central unit (CU) and a distributed unit (DU), in which the CU may also be called a control unit. A protocol layer of the access network device may be divided by employing the CU-DU structure. Some functions of the protocol layer are centrally controlled by the CU, and some or all of remaining functions of the protocol layer are distributed in the DU which is centrally controlled by the CU, but is not limited herein.

In some embodiments, the core network device 103 may be a device including one or more network elements 1031, or may be multiple devices or device groups, each including all or some of one or more network elements 1031. The network element may be virtual or physical. The core network may include, such as, at least one of an evolved packet core (EPC), a 5G core network (5GCN), or a next generation core (NGC).

In some embodiments, the first network element 1031 is, such as, an access and mobility management function (AMF).

In some embodiments, the first network element 1031 is, such as, a mobility management entity (MME).

In some embodiments, the first network element 1031 is used for access mobility management, such as registration management, connection management and mobility management, the name of which is not limited to this.

In some embodiments, the first network element 1031 may be a network element independent of the core network device.

In some embodiments, the core network may also include a second network element, and the second element may include user data management (UDM), etc.

It may be understood that the communication system in embodiments of the disclosure is to clearly illustrate the technical solution of embodiments of the disclosure, which does not constitute a limitation on the technical solution in embodiments of the disclosure. Those skilled in the art may know, with evolution of the system architecture and emergence of new service scenarios, the technical solution in embodiments of the disclosure is also applicable to similar technical problems.

The following embodiments of the disclosure may be applied to the communication system 100 illustrated in FIG. 1A, or to some entities, which are not limited to this. Entities in FIG. 1A are illustrative. The communication system may include all or some of the entities in FIG. 1A, or may include other entities not illustrated in FIG. 1A. The number of entities and the form of the entities may be arbitrary. A connection relationship between the entities is illustrative. The entities may be unconnected or may be connected. The connection may be in any manner, which may be a direct connection or indirect connection, or may be a wired or wireless connection.

Embodiments of the disclosure may be applied to long term evolution (LTE), LTE-Advanced (LTE-A), LTE-Beyond (LTE-B), SUPER 3G, IMT-Advanced, a 4th generation mobile communication system (4G), a 5th generation mobile communication system (5G), 5G new radio (NR), future radio access (FRA), new-radio access technology (RAT), new radio (NR), new radio access (NX), future generation radio access (FX), a global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), a public land mobile network (PLMN), a device-to-device (D2D) system, a machine to machine (M2M) system, Internet of Things (IoT) system, Vehicle-to-Everything (V2X), a system using other method for processing a time-frequency resource of a PDCCH candidate, a next-generation system based on them, etc. In addition, a combination of multiple systems (such as, a combination of LTE or LTE-A with 5G) may be applied.

FIG. 1B is a schematic diagram illustrating a SBFD symbol.

In addition, there may be a GB between a DL subband and a UL subband, and an interference between a DL signal in the DL subband and a UL signal in the UL subband is reduced by frequency domain isolation.

In the SBFD symbol, a frequency domain range available for the DL transmission may be discontinuous, including the following two cases:

GB and UL subbands are not available for DL transmission, and the DL subband may be used for the DL transmission.

The UL subband is not available for the DL transmission, and the DL subband and the GB may be used for the DL transmission.

In the SBFD symbol, a frequency domain range for the DL transmission may be called DL frequency domain range, and a frequency domain range that may not be used for the DL transmission may be called outside the DL frequency domain range. Based on the above analysis, DL frequency domain ranges of a non-SBFD symbol and the SBFD symbol are different. The DL frequency domain range is a DL frequency domain range on a CC. In the SBFD symbol, the DL frequency domain range on a BWP refers to the frequency domain range where the BWP and the DL frequency domain range on the CC overlap.

Here, the DL frequency domain range may be the frequency domain range for DL transmission.

A UL frequency domain range may be a frequency domain range for UL transmission.

As illustrated in FIG. 1C, a network device configures one or more configuration search space (SS) for a UE, and a configuration of an SS includes an SS period and a time slot where the SS is located in the period, a symbol and a frequency domain range where the SS is located. That is, the network device configures one or more SS time-frequency positions for each UE. Based on information such as an index of the time slot where the SS is located and an identification of the UE, a time-frequency position of a PDCCH candidate in the SS is determined. The UE blindly detects a PDCCH #1 at a time-frequency position of a PDCCH candidate # 1. When the PDCCH # 1 is detected successfully, the UE receives the PDCCH #1.

The following conditions may exist. In a period #m, the symbol where the SS located is the non-SBFD symbol. In a period #n, the symbol where the SS located is the SBFD symbol. Alternatively, in the period #m, the symbol where the SS is located in a time slot #m1 is the non-SBFD symbol, and the symbol where the SS is located in a time slot #m2 is the SBFD symbol. As illustrated in the following drawings, a period of the SS is 5, the SS is in an OFDM symbol (OS) #0-1 in time slots # 0, 1, 5, 6..., 5k, 5k+1, where k is an integer. In a case that the frequency domain ranges for the DL transmission in the non-SBFD are different from the frequency domain ranges for the DL transmission in the SBFD symbols, there needs to determine the frequency domain range of the SS in the SBFD symbol and a time-frequency resource used for PDCCH candidate transmission.

Related description is made below to the CORESET and the PDCCH candidate.

REG: occupying one RB in the frequency domain and one OFDM symbol (OS) in the time domain.

REG bundle: one REG bundle is combined by multiple REGs, and a number of REGs included is L, which is determined based on a parameter "reg-BundleSize" configured by a parameter RRC.

CCE: including six REGs. The REG bundle included in the CCE is determined based on a mapping rule of CCE-REG, and then a time-frequency position of the REG included in the CCE is determined, that is, the time-frequency position of the CCE is determined.

A mapping manner from the CCE to the REG include an interleaving manner and a non-interleaving manner.

One or more CCEs included in one PDCCH candidate. In this way, the time-frequency position of the PDCCH candidate may be determined based on the time-frequency position of the CCE.

The following provides a configuration and understanding of the CORESET.

```
ControlResourceSet ::=            SEQUENCE {
   a)  controlResourceSetId         ControlResourceSetId，
   b)  frequencyDomainResources     BIT STRING (SIZE (45))，
   c)  duration                                  INTEGER
```

```
        (1..maxCoReSetDuration),
  d)  cce-REG-MappingType              CHOICE {
   i.   interleaved                    SEQUENCE {
        1.  reg-BundleSize             ENUMERATED {n2, n3, n6},
        2.  interleaverSize            ENUMERATED {n2, n3, n6},
        3.  shiftIndex        INTEGER(0..maxNrofPhysicalResourceBlocks-1)
  ii.   },
 iii.   nonInterleaved                 NULL
      },
      ......
      }
```

controlresourceset: an identification of CORESET.

frequencyDomainResources: a 45-bit bitmap.

In an embodiment, the bitmap may configure the frequency domain range of the CORESET.

A bit value of an RBG including 6 RBs corresponding to one bit is "1", represents that the corresponding RBG is in the frequency domain range of the CORESET, and a bit value of 0 represents that the corresponding RBG is not in the frequency domain range of the CORESET. In a case that not all RBs in the RBG are in the BWP to which the CORESET belongs, the bit corresponding to the RBG should be configured as "0".

duration: the number of symbols, representing the number of symbols that the CORESET lasts in the time domain.

reg-BundleSize: when interleaving mapping is performed, a size of an REG bundle is L, and n2 represents 2 REGs, that is, L = 2.

interleaverSize: when interleaving mapping is performed, a size of an interleaver is R.

nonInterleaved: representing that the mapping of CCE-REG employs a non-interleaving mapping. In this case, reg-BundleSize uses a default value n6, that is, L=6.

As illustrated in FIG. 1D, an example of a configuration is as follows. The BWP includes 36 RBs.

frequencyDomainResources: 1111110000, ..., 0000 (39 zeros after 11111), representing that the frequency domain range of the CORESET is RB#0~#35 in the BWP.

duration: 2, representing that the CORESET occupies 2 symbols in the time domain.

A numbering manner of an REG index: a serial number sorted in the order with a time domain priority in the CORESET.

The following provides a configuration and understanding of the SS:

```
      SearchSpace ::=                          SEQUENCE {
  a)   searchSpaceId                           SearchSpaceId,
  b)   controlResourceSetId                    ControlResourceSetId
  c)   monitoringSlotPeriodicityAndOffset      CHOICE {..}
       duration                                INTEGER (2..2559)
       monitoringSymbolsWithinSlot             BIT STRING (SIZE (14))
  a)   ...,
       }
```

searchSpaceId: the identification of the SS.

controlResourceSetId: an identification of the CORESET associated with the SS.

monitoringSlotPeriodicityAndOffset: a period of the SS and a serial number of a starting time slot within the period.

duration: a number of consecutive time slots including the SS in the period of the SS.

monitoringSymbolsWithinSlot: a 14-bit bitmap, indicating a detailed position of the symbol occupied by the SS in one time slot, and the number of symbols of one SS is equal to a number of symbols occupied by a CORESET corresponding to controlResourceSetId (that is, a duration in a CORESET configuration).

Referring to FIG. 1C, an SS configuration is provided, which may be as follows.

An example of the SS configuration is as follows:

monitoringSlotPeriodicity AndOffset: {sl5 0}, representing that the period is 5, and a start slot of the SS in the period is 0.
duration = 2, and there are SS in two consecutive slots in the period, that is, a slot 0 and a slot 1.
monitoringSymbolsWithinSlot = 100000000000000, there is one SS in one time slot, a start OS of the SS is OS#2, and the number of OSs occupied by one SS in the time slot is 2 (the number of OSs is determined based on a duration configured in the associated CORESET), so the SS occupies an OS#0 and an OS#1 in the time slot.

The frequency domain range of the SS is a frequency domain range of CORESET configuration corresponding to controlResourceSetId.

An example of the mapping of the CCE-to-REG is provided below.

The number of REGs included in the CORESET is: $N_{REG}^{CORESET} = N_{RB}^{CORESET} N_{symb}^{CORESET}$ , where $N_{REG}^{CORESET,}$ represents a number of symbols included in the CORESET in the time domain, to ensure an accurate mapping of the CCE-REG.

In the non-interleaving manner, it needs to be met that $N_{REG}^{CORESET}/L$ is an integer.

In the non-interleaving manner, it needs to be met that $N_{REG}^{CORESET}/L$ and $C = N_{REG}^{CORESET}/(LR)$ are integers.

The non-interleaving manner here may also be called a non-interleaving mapping manner, and the interleaving manner may also be called an interleaving mapping manner.

The non-interleaving manner may be understood as a continuous mapping manner.

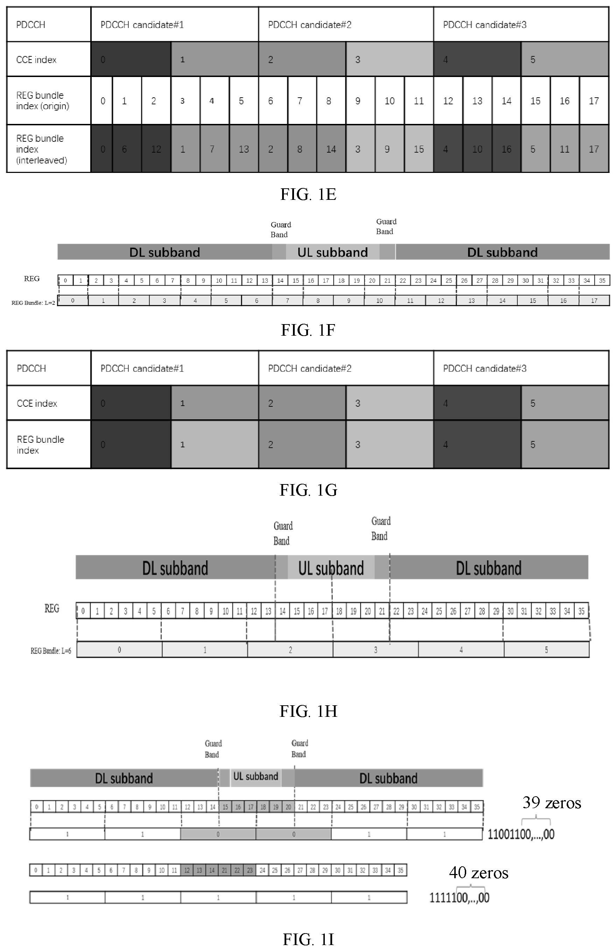

Referring to FIG. 1E and FIG. 1F, an example of the interleaving mapping is provided as follows.

The number of symbols in the CORESET is 1, including 36 REGs, $N_{REG}^{CORESET}$ =36.

The REG bundle includes 2 REGs, that is, L=2, and the CORESET has a number $N_{REG}^{CORESET}/L$ =18 of REG bundles.

The size R of the interleaver =3, configured by the parameter "interleaverSize", corresponding to a number of rows of the interleaver. $C = N_{REG}^{CORESET}/(L*R)=6$, corresponding to a number of columns of the interleaver.

One PDCCH includes 2 CCEs.

An REG bundle included in a CCE # j is: {f(6j/L, f(6j/L + 1), ..., f(6j/L + 6/L - 1))}, where f(*) is the interleaver, and a result after interleaving is illustrated in FIG. 1E, as follows.

CCE # 0 includes REG bundles {#0, 6, 12}.

CCE # 1 includes REG bundles {#1, 7, 13}.

CCE # 2 includes REG bundles {#2, 8, 14}.

CCE # 3 includes REG bundles {#3, 9, 15}.

CCE # 4 includes REG bundles {#4, 10, 16}.

CCE # 5 includes REG bundles {#5, 11, 17}.

It is assumed that in the SBFD symbol, the REG bundles #7, 8, 9, and 10 are outside the DL frequency domain range, as illustrated in FIG. 1F. Considering that the REG bundles #7, 8, 9, and 10 are respectively in the CCE#1, 2, 3, and 4 respectively, the frequency domain ranges of the CCE#1, 2, 3, and 4 overlaps with a frequency domain of a DL frequency domain range, which may not be used for PDCCH reception. Since the PDCCH candidate #1 includes the CCE#1, the PDCCH candidate # 2 includes the CCE#2 and the CCE # 3, and the PDCCH candidate # 3 includes the CCE#4, at this time, all the PDCCH candidates # 1, 2 and 3 may not perform the PDCCH transmission.

Similarly, the REG bundle includes six REGs. When other configuration parameters are unchanged, it may be obtained that the PDCCH candidates #1 and # 3 may not be used for the PDCCH transmission.

Referring to FIG. 1G and 1H, an example of the non-interleaving mapping is illustrated as follows.

The symbol number of the CORESET is 1, including 36 REGs, $N_{REG}^{CORESET}/L=36$.

The REG bundle includes 6 REGs by default, that is, L=6. The CORESET has a number $N_{REG}^{CORESET}/L=6$ of REG bundles.

One PDCCH includes 2 CCEs.

In a case that the non-interleaving manner is employed, an interleaved CCE is as follows.

CCE # 0 includes REG bundle {#0}.

CCE # 1 includes REG bundle {#1}.

CCE # 2 includes REG bundle {#2}.

CCE # 3 includes REG bundle {#3}.

CCE # 4 includes REG bundle {#4}.

CCE # 5 includes REG bundle {#5}.

It is assumed that in the SBFD symbol, the REG bundles #2 and 3 overlap with the frequency domain outside the DL frequency domain range, as illustrated in FIG. 1H. Considering that the REG bundles # 2,3 are in the CCEs # 2,3, a frequency domain range of the CCE # 2,3 overlaps with that outside the DL frequency domain range, which may not be used for the PDCCH reception. The PDCCH candidate #2 includes the CCE#2 and CCE # 3. At this time, only the PDCCH candidate #2 may not perform the PDCCH transmission.

It can be understood that the interleaving mapping leads to dispersion of the REG bundles outside the DL frequency domain to the CCE, which causes decrease of the number of PDCCH candidates (not including PDCCH candidates of the REG bundles outside the DL frequency domain range) that can be used for the PDCCH transmission compared with the non-interleaving mapping.

It may be seen that when a frequency domain range configured by CORESET#m overlaps with the frequency domain outside the frequency domain range of the DL transmission, and the symbol on the time slot #m1 of the SS associated with CORESET#m is the SBFD symbol, there needs to determine a new mapping manner of the CCE-REG, such that more PDCCH candidates may be used in the DL frequency domain range.

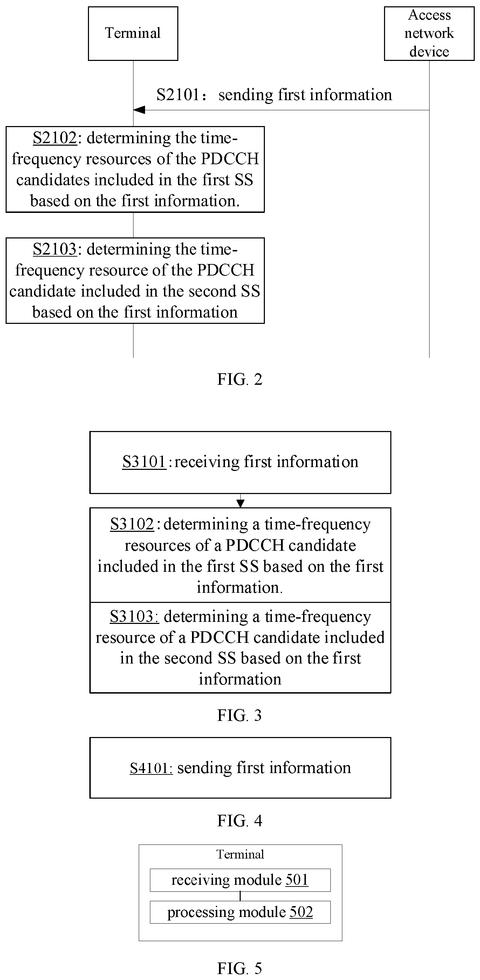

FIG. 2 is a flow chart illustrating a method for processing a time-frequency resource of a PDCCH candidate according to an exemplary embodiment. As illustrated in FIG. 2, embodiments of the disclosure relate to the method for processing the time-frequency resource of the PDCCH candidate, which is used in a communication system 100. In some embodiments, the communication system 100 may include an access network device and a terminal. The method includes the following.

At step 2101, the access network device sends first information.

The access network device includes but is not limited to various types of base stations, such as eNB and/or gNB.

In some embodiments, the access network device broadcasts the first information.

In some embodiments, the access network device multicasts the first information.

In still other embodiments, the access network device unicasts the first information.

In some embodiments, the first information is used to indicate time-frequency resources of an SS set.

In some embodiments, a time domain unit where one or more first SSs in the SS set are located is an SBFD time domain unit.

In some embodiments, any SS in the SS set corresponds to the time-frequency domain resources configured by the network device. Any SS may include one or more PDCCH candidates, which may be used for the DCI transmission.

In some embodiments, the SS may include a public SS and a UE-specific SS.

In some embodiments, the SBFD time domain unit may include, but is not limited to, an SBFD slot, an SBFD micro slot, and/or an SBFD symbol.

In some embodiments, the SBFD symbol may be an OFDM symbol including both DL frequency domain resources and UL frequency domain resources.

In some embodiments, the access network device sends an RRC message or an MAC control element (CE) or a system information block (SIB, etc.) carrying the first information.

In some embodiments, the first information may be considered as configuration information of the SS and/or CORESET.

In some embodiments, the first information may be at least considered as the configuration information of the PDCCH candidate.

In some embodiments, the first information includes at least one of:

configuration information of a CORESET with an index m; a value of m being a positive integer;
configuration information of an SS set associated with the CORESET; or
a frequency domain range available for a DL transmission on a CC in the SBFD time domain unit;
in which the configuration information of the CORESET indicates that the first SS occupies a number Z1 of time domain units in a time domain;
the configuration information of the SS set indicates that a number of PDCCH candidates with an aggregation level A1 included in the first SS is X1, and indexes of the number X1 of PDCCH candidates are 0 to X1-1;
time-frequency resources of the PDCCH candidates with the aggregation level A1 include a number A1 of control channel elements (CCEs);
A1 is a positive integer;

X1 is a positive integer; and
Z1 is one of 1, 2 and 3.

In embodiments of the disclosure, a value of m may be a natural number.

In some embodiments, a range value of m may be from 0 to 16 or 0 to 12.

In some embodiments, the value range of m is a positive integer, which excludes the configuration of the first information on the CORESET#0.

The CORESET with the index m may be written as CORESET # m.

In some embodiments, the terminal receives the first information.

Before the access network device sends the first information, the first information is configured based on a characteristic that the time-frequency resource of the PDCCH candidate is located in the DL frequency domain range as much as possible.

For example, when the first information is configured, the first information may be determined based on the first SS and the second SS in the SS set configured.

In some embodiments, the time domain unit of the first SS at least includes the SBDF time domain unit. The time domain unit of the second SS does not include the SBFD time domain unit. That is, the time domain unit of the second SS includes the non-SBFD time domain unit.

In some embodiments, all the time domain units of the first SS are the SBDF time domain units. All the time domain units of the second SS are the non-SBFD time domain units.

In some embodiments, the DL frequency domain resources and the UL frequency domain resources of the SBFD time domain unit may be continuously distributed, or may have a GB. Such GB may reduce adjacent frequency interference, thus improving the communication quality. For example, the SBFD time domain unit includes a guard band GB in the frequency domain; in which, the GB is located between the DL subband and the UL subband.

In some embodiments, the frequency domain resources of the SBFD time domain unit include DL resources and UL resources. For example, SBFD time domain units correspond to both the DL subband and the UL subband.

In some embodiments, the non-SBFD time domain unit may include a UL time domain unit, a DL time domain unit and/or a flexible (F) time domain unit. The UL time domain unit only involves a UL frequency domain range. The DL time domain unit only involves a DL frequency domain range. There is no detailed limitation on whether a frequency domain range of the F time domain unit is used for uplink or downlink transmission, which may be flexibly used by the network device and the terminal.

In embodiments of the disclosure, a time domain unit where one or more second SSs in the SS set are located is the non-SBFD time domain unit, and a number of PDCCH candidates with an aggregation level A2 included in the second SS is X2.

The configuration information of the CORESET indicates that the second SS in the SS set occupies a number Z2 of time domain units in the time domain;

A2 is a positive integer;
X2 is a positive integer;
Z2 is one of 1, 2 and 3;
A2 is the same as or different from A1; and/or
X2 is the same as or different from X1; and/or
Z2 is the same as or different from Z1.

At step S2102, the terminal determines the time-frequency resources of the PDCCH candidates included in the first SS based on the first information.

In some embodiments, step S2102 may include:

determining an index k of a time slot where the first SS is located based on the first information;
determining an index of a CCE included in each PDCCH candidate located on the time slot with the index k based on the index k of the time slot where the first SS is located and an identification of the terminal;
determining a time-frequency resource of any CCE included in the first SS based on the first information; and
determining the time-frequency resources of the number X1 of PDCCH candidates based on the index of the CCE included in each PDCCH.

For example, the k may be a natural number.

One PDCCH candidate may be combined by one or more CCEs. Firstly, the index k of the time slot where the second SS is located is determined. Then based on the index of CCE included in the PDCCH candidate of the time slot indicated by the first information.

The time-frequency resource and the index of any CCE included in the second SS are determined based on the first information.

Then, based on the index matching, the time-frequency resources of the PDCCH candidates may be determined based on the time-frequency resources of the CCE.

In some embodiments, the access network device sends the DCI on one or more time-frequency resources of the configured PDCCH candidates.

Step S2103, the terminal determines the time-frequency resource of the PDCCH candidate included in the second SS based on the first information.

In some embodiments, step S2103 may include:

determining an index of a time slot where a second SS is located based on the first information;
determining the index of the CCE included in the PDCCH candidate in the time slot where the second SS is located based on the time slot where the second SS is located and the identification of the terminal;
determining a time-frequency resource of any CCE included in the second SS based on the first information;
determining the time-frequency resources of the number X2 of PDCCH candidates based on the index of the CCE included in each PDCCH candidate.

For example, k may be a natural number.

In some embodiments, after determining the time-frequency resource of the PDCCH candidate based on the first information, the terminal may perform DCI monitoring and DCI blind detection on the PDCCH candidate, thus obtaining any instruction sent by the network device through the PDCCH.

In embodiments of the disclosure, when the PDCCH candidate is determined, it is determined whether a first SS located in the SBFD time-domain unit exists in the SS set, and the PDCCH candidate of the first SS is determined for the first SS, such that the PDCCH candidate of the first SS is located within the DL frequency domain range as much as possible, reducing a problem that the PDCCH candidate is unavailable for the DCI transmission, in which the problem is caused by the PDCCH candidate being located within the UL frequency domain range.

Several alternative solutions for steps S2102 to S2102 are provided.

Solution 1:

When the PDCCH candidate is determined, the mapping employed by the first SS between the REG bundle and the CCE may be different from the mapping employed by the second SS between the REG bundle and the CCE, thus reducing the probability that the PDCCH candidate of the first SS is located in the UL frequency domain range.

Based on this purpose, in some embodiments, the first manner is to determine the time-frequency resource of the PDCCH candidate included in the first SS; Alternatively, the first manner includes a non-interleaving manner.

The non-interleaving manner here is a continuous mapping manner, which may enable a frequency resource range of the CCE distribution smaller, thus reducing the probability that one or more CCEs included in the PDCCH candidate is located in the UL frequency domain range, and allowing more PDCCH candidates to be used for the DCI transmission.

In other embodiments, the second manner is used to determine the time-frequency resource of the PDCCH candidate included in the second SS, in which the second manner is one of the interleaving manner and the non-interleaving manner.

Since the time domain unit of the second SS is not the SBFD, the mapping between the RBG bundle and the CCE involved in the second SS may be flexibly set, that is, the interleaving manner and the non-interleaving manner may be flexibly employed.

In some embodiments, the configuration information of the CORESET also indicates the second manner. In this way, the access network device may indicate the detailed manner to be used by the first information. In such embodiment, the configuration information of the CORESET is used to indicate the second manner. In fact, the second manner may also be indicated in a separate information unit in the first information, not limited to indicating by the configuration information of the CORESET.

In another embodiment, the first information may not indicate the manner in which the REG bundle involved in the second SS is mapped to the CCE. Instead, the interleaving manner is determined based on an agreement or by selecting the interleaving manner preferably, such that the frequency domain resources of the PDCCH candidate are interleaved in the frequency domain, thus improving the reliability of the DCI transmission by the PDCCH candidate.

Solution 2:

When each SS in the SS set is configured, a resource position of each PDCCH candidate is located in the DL frequency domain range.

That is, in some embodiments, the first information is used to enable the frequency domain range of the first SS to be located in the first frequency domain range.

For example, the first frequency domain range is the DL frequency domain range. The DL frequency domain range may be used for the frequency domain range of the DL transmission.

In some embodiments, the first frequency domain range is that: a frequency domain range of a BWP to which the CORESET belongs or a CFR of a MBS, for the DL transmission in the SBFD time domain unit.

The first frequency domain range may be configured by an RRC message or a system message block. For example, the first frequency domain range may be configured by SIB1 broadcasting.

In some embodiments, the first frequency domain range may be configured by the first information. In such case, the first information may also include the configuration of the first frequency domain range.

In this way, even if the first SS is located on the SBFD time domain symbol, since the frequency domain range of the first SS is located in the frequency domain range used for the DL transmission, the PDCCH candidates of the first SS is in the DL frequency domain range, such that all the PDCCH candidates may be used for the DCI transmission.

In the case that it is determined based on the first information that all the PDCCH candidates of the first SS are located in the DL frequency domain range, the non-interleaving manner used is not limited when detailed time-frequency resources of the PDCCH candidate are determined.

That is, in the case of Solution 2, the first SS located in the SBFD time domain unit may also employ the interleaving manner or the non-interleaving manner, to realize the mapping between the REG and the CCE.

In detail, to enable the frequency domain range of the first SS located in the DL frequency domain range, the first SS and the second SS may be configured separately.

In this case, the configuration of the first SS may be referred to as the first configuration. The configuration of the second SS may be referred to as the second configuration.

That is, the first SS and the second SS in the SS set are configured on a detailed condition.

In this case, in the case that there are both the first SS and the second SS in the SS set, the first information may include two sets of configurations.

Detailed description is made below to a condition where the PDCCH candidates located in the DL frequency domain range is configured based on the first configuration of the first SS and the second configuration of the second SS.

A difference between that first configuration and the second configuration may be presented in one of the following.

The frequency domain ranges of the first SS and the second SS are different;

The mapping rule between the REG bundle and the CCE in the first SS is different from that in the second SS. For example, different mapping rules may include: the sizes of the REG bundles are different, and/or the mapping manners are different. The mapping manner may include: the interleaving manner and/or the non-interleaving manner.

When both the first SS and the second SS realize the mapping between the REG bundle and the CCE in the interleaving manner, the sizes of the interleavers used are different.

Of course, the above is only an example of the difference between the first configuration and the second configuration, and the detailed implementation is not limited to the above examples.

Solution 2.1:

In a case that the frequency domain ranges of the first SS and the second SS are configured differently, the following solution is employed.

Solution 2.1.1

The first configuration of the first SS and the second configuration of the second SS are configured with respective frequency domain ranges. In this case,

in some embodiments, the first information is also used to enable the mapping of the CCE to the REG of the first SS to meet the first condition.

In some embodiments, the first information enables that the first condition is met when the first SS is mapped to the REG, which may be considered that the first configuration enables that the first condition is met when the first SS is mapped to the REG.

For the second SS, the first information is used to enable the frequency domain range of the second SS to locate in the second frequency domain range, and the second condition is met when the CCE of the second SS is mapped to the REG.

In a detailed implementation, there are multiple first conditions, and the following alternative manners are provided.

For the interleaving manner, the first condition is that:

$N_{REG}^{CORESET,3}/L_3$ is a positive integer;

$C_3 = N_{REG}^{CORESET,3}/(L_3 R_3)$ is a positive integer.

For the non-interleaving manner, the first condition is that:

$N_{REG}^{CORESET,3}/6$ is a positive integer,

where $N_{REG}^{CORESET,3}$ represents a number of REGs included in the time-frequency resources of the first SS;

$$N_{REG}^{CORESET,3} = N_{RB}^{CORESET,3} N_{symb}^{CORESET};$$

$N_{RB}^{CORESET,3}$ represents a number of RBs included in the frequency domain range of the first SS;

$N_{symb}^{CORESET}$ represents the number Z1 of time domain units included in the first SS; in a case that the time domain unit is a symbol, $N_{symb}^{CORESET}$ represents a number of symbols,

$L_3$ represents a size of an REG bundle of the first SS; and

$R_3$ represents a size of an interleaver of the first SS.

In this way, it is equivalent to making the whole second SS within the range of the DL frequency domain range, so the PDCCH candidate of the second SS must also be within the DL frequency domain range.

In some embodiments, the second frequency domain range is a frequency domain range of the BWP to which the CORESET belongs or the CFR of the MBS.

In a case that the second frequency domain range is within the frequency domain range of the BWP and the FR of the MBS illustrated by the CORESET, the second SS is necessarily located in the DL frequency domain range.

In a detailed implementation, there are multiple second conditions, and the following alternative manners are provided.

For the interleaving manner, the second condition is that:

$N_{REG}^{CORESET,3}/L_3$ is a positive integer;

$C_3 = N_{REG}^{CORESET,3}/(L_3 R_3)$ is a positive integer.

For the non-interleaving manner, the second condition is that:

$N_{REG}^{CORESET,3}/6$ is a positive integer,

where $N_{REG}^{CORESET,3}$ represents a number of REGs included in the time-frequency resources of the second SS,

$$N_{REG}^{CORESET,3} = N_{RB}^{CORESET,3} N_{symb}^{CORESET};$$

$N_{RB}^{CORESET,3}$ represents a number of RBs included in the frequency domain range of the second SS;

$N_{symb}^{CORESET}$ represents the number Z2 of time domain units included in the second SS;

$L_3$ represents a size of an REG bundle of the second SS; and

$R_3$ represents a size of an interleaver of the second SS.

When Solution 2.1.1 is employed, RBs included in one RBG are continuously distributed in the frequency domain. Alternatively, the RBs included in one RBG are discontinuously distributed in the frequency domain.

In some embodiments, RBs included in one RBG in the frequency domain range of the first SS are distributed discontinuously in the frequency domain. The RBs in the first frequency domain are numbered based on a first numbering manner. The first numbering manner continuously numbers RBs from small to large based on the sizes of central frequencies of the RBs, and each RBG includes six RBs with continuous serial numbers.

Solution 2.1.3

The frequency domain ranges of the first SS and the second SS are still configured in different manners, but the frequency domain range of the first SS may not be directly configured based on the first configuration of the first SS, but the second configuration of the second SS is employed to determine the frequency domain range of the first SS.

In some embodiments, the second configuration includes configuration of the frequency domain range of the second SS.

Each RB of one RBG is located in the frequency domain range of the second SS, and a bit in the second bit bitmap has a first value.

At least one RB of one RBG is located outside the frequency domain range of the second SS, and a bit in the second bit bitmap has a second value.

A first RB in an RBG corresponding to a first bit of the second bit bitmap is a first RB in the second frequency domain range.

The second value is different from the first value.

For example, the first value and the second value here may be one of "0" and "1", and in the case that the first value is "0", the second value is "1". In the case that the first value is "1", the second value is "0".

In some embodiments, a first bit bitmap of the first configuration is a default, and the second bit bitmap is reused to determine a third frequency domain range; a frequency domain range of the first SS is a subset of the third frequency domain range;

in a case that the second bit bitmap has the bit with the first value and a third condition is met, an RBG corresponding to the bit with the first value is located in the third frequency domain range;
in a case that the second bit bitmap has the bit with the first value and the third condition is not met, the RBG corresponding to the bit with the first value is not located in the third frequency domain range; and
in a case that the second bit bitmap has the bit with the second value, an RBG corresponding to the bit with the second value is not located in the third frequency domain range.

In some embodiments, the third frequency domain range may be a maximum frequency domain range of the first SS.

In some embodiments, there are multiple third conditions, and an alternative manner is provided below.

The third condition is that the RBG corresponding to the bit with the first value in the second bit bitmap is located in a first frequency domain range; the first frequency domain range is: a frequency domain range of a BWP to which the CORESET belongs or a CFR of a MBS, for the DL transmission in the SBFD time domain unit.

Solution 2.1.4

The frequency domain ranges of the first SS and the second SS are still configured differently, but the frequency domain range of the first SS may not be directly configured based on the first configuration of the first SS, but the second configuration of the second SS is borrowed to determine the frequency domain range of the first SS.

In some embodiments, the first bit bitmap of the first configuration is a default, and the second bit bitmap is reused to determine a fourth frequency domain range; a frequency domain range of the first SS is a subset of the fourth frequency domain range;

in a case that the second bit bitmap has the bit with the first value and a fourth condition is met, an RB belonging to a first frequency domain range in an RBG corresponding to the bit with the first value is located in the fourth frequency domain range;
in a case that the second bit bitmap has the bit with the first value and the fourth condition is not met, the RBG corresponding to the bit with the first value is not located in the fourth frequency domain range; and
in a case that the second bit bitmap has the bit with the second value, the RBG corresponding to the bit with the second value is not located in the fourth frequency domain range.

The first bit bitmap of the first configuration defaults, which is equivalent to that the first configuration does not include the frequency domain range of the first SS. At this time, the frequency domain range of the first SS is determined based on the second bit bitmap.

In some embodiments, the fourth frequency domain range may be the maximum frequency domain range of the first SS.

In some embodiments, some or all of the RBG corresponding to the bit with the first value in the second bit bitmap is located in the first frequency domain range, in which the first frequency domain range is: a frequency domain range of a BWP to which the CORESET belongs or a CFR of an MBS, for the DL transmission in the SBFD time domain unit.

It is worth noted that in both Solution 2.1.3 and Solution 2.1.4, the second configuration has the frequency domain range of the second SS, and the frequency domain range of the second SS is indicated by the second bit bitmap.

In some embodiments, the second configuration includes a frequency domain range configuration of the second SS;

each RB of one RBG is located in the frequency domain range of the second SS, and a bit in the second bit bitmap has a first value;

at least one RB of one RBG is located outside the frequency domain range of the second SS, and a bit in the second bit bitmap has a second value,

a first RB in an RBG corresponding to a first bit of the second bit bitmap is a first RB in the second frequency domain range; and

the second value is different from the first value.

That is, when the first SS and the second SS are configured, different configuration interpretation manners are employed, and the frequency domain ranges of the first SS and the second SS are indicated simultaneously by borrowing a bit map, thus reducing a signaling overhead of the first information.

Meanwhile, Solution 2.1.3 and Solution 2.1.4 may respectively determine the frequency domain range of the first SS, the CCE, the control resource set and/or the time-frequency resources of the PDCCH candidates in the following ways.

In some embodiments, the number of REGs included in the first SS does not exceed $N_{REG}^{CORESET,3}$;

$N_{REG}^{CORESET,3}$ represents a maximum number of REGs included in the first SS;

$$N_{REG}^{CORESET,3} = N_{RB}^{CORESET,3} N_{symb}^{CORESET};$$

$N_{RB}^{CORESET,3}$ represents a number of RBs included in the third frequency domain range or the fourth frequency domain range; and

$N_{symb}^{CORESET}$ represents the number Z1 of time domain units occupied by the first SS.

In some embodiments, for the interleaving manner, the number of REGs of the first SS is $N_{REG}^{CORESET,4}$, and $N_{REG}^{CORESET,4}$ has the following characteristic that

$N_{REG}^{CORESET,4}/L_4$ is a maximum positive integer in a value range of $N_{REG}^{CORESET,4}$;

$C_4 = N_{REG}^{CORESET,4}/(L_4 R_4)$ is a maximum positive integer in the value range of $N_{REG}^{CORESET,4}$, where $L_4$ represents a size of the REG bundle of the first SS, and $R_4$ represents a size of the interleaver of the first SS; and/or

for the non-interleaving manner, the number of REGs of the first SS is $N_{REG}^{CORESET,5}$, and $N_{REG}^{CORESET,5}$ has the following characteristic that:

$N_{REG}^{CORESET,5}/6$ is a maximum positive integer in a value range of $N_{REG}^{CORESET,5}$.

In some embodiments, time-frequency resources of a number $N_{REG}^{CORESET,4}$ of REGs are: time-frequency resources of remained REGs after removing a number N4 of REGs with maximum REG indexes or a number N4 of REGs with minimum REG indexes from a number $N_{REG}^{CORESET,3}$ of REGs; and

time-frequency resources of a number $N_{REG}^{CORESET,5}$ of REGs are: time-frequency resources of remained REGs after removing a number N5 of REGs with maximum REG indexes or a number N5 of REGs with minimum REG indexes from the number $N_{REG}^{CORESET,3}$ of REGs.

In Solution 2.1.1, Solution 2.1.3 and Solution 2.1.4:

Differentiated configuration for the REG bundle to the first SS and for the REG bundle to the second SS is as follows.

For the interleaving manner, the first configuration indicates a preset size of the REG bundle of the first SS, and the first SS employs the preset size of the REG bundle; and/or

for the interleaving manner, the first configuration does not indicate the preset size of the REG bundle of the first SS, and the first SS employs the preset size of the REG bundle indicated by the second configuration.

For the non-interleaving manner, the preset sizes of the REG bundles of the first SS and the second SS are 6, and no configuration is required.

That is, based on whether the mapping manner between the REG bundle of the first SS and the CCE employs the interleaving manner, it is determined whether there needs to realize differential configuration of the sizes of the REG bundles of the first SS and the second SS.

In Solution 2.1.1, Solution 2.1.3 and Solution 2.1.4:

Differentiated configuration of interleavers of the first SS and the second SS is as follows.

For the interleaving manner, the first configuration indicates a preset size of an interleaver of the first SS, the first SS uses the preset size of the interleaver, and/or

for the interleaving manner, the first configuration does not indicate the preset size of the interleaver of the first SS, and the first SS uses a preset size of an interleaver indicated by the second configuration.

For the non-interleaving manner, the first SS and the second SS do not use the interleaver, and the preset sizes of the interleavers of the first SS and the second SS need not be configured.

That is, based on whether the mapping manner between the REG bundle of the first SS and the CCE employs the interleaving manner, it is determined whether there needs to realize the differential configuration of the interleavers of the first SS and the second SS.

All Solution 2.1.1, Solution 2.1.3 and Solution 2.1.4 may realize that PDCCH candidates of the first SS are configured in the DL frequency domain range, and ensure that the mapping between the REG and the CCE is correct.

In a case that any one of Solution 2 is employed, configurations of the first SS and the second SS may also have the following characteristics.

A mapping rule between the REG and the CCE of the first SS is different from that between the REG and CCE of the second SS;

or

a mapping rule between the REG and the CCE of the first SS is the same as that between the REG and CCE of the second SS.

That is, the mapping rule between the REG and the CCE of the first SS may be the same as or different from that between the REG and CCE of the second SS, which may be set flexibly.

FIG. 3 is a flow chart illustrating an interaction of a method for processing a time-frequency resource of a PDCCH candidate according to an exemplary embodiment. As illustrated in FIG. 3, embodiments of the disclosure relate to the method for processing the time-frequency resource of the PDCCH candidate, which is executed by a terminal. The method includes the following.

At S3101, first information is received.

In some embodiments, the first information sent by an access network device is received.

In some embodiments, a terminal in a connected state receives the first information multicasted, broadcasted or unicasted by the access network device.

For example, the first information is received based on a connection release message in which the terminal in the connected state enters a disconnected state.

In still other embodiments, the terminal in the disconnected state receives first information broadcast or multicast by the access network device.

For example, the disconnected state includes, but is not limited to, an idle state and/or an inactive state.

For related descriptions such as the information content of the first information, please refer to the embodiments illustrated in FIG. 2.

At step S3102, a time-frequency resources of a PDCCH candidate included in the first SS is determined based on the first information.

The detailed way for determining the time-frequency resource of the PDCCH candidate included in the one or more first SSs based on the first information may be found in the related description of step S2102 in FIG. 2, which is not repeated here.

At step S3103, a time-frequency resource of a PDCCH candidate included in the second SS is determined based on the first information.

The detailed way for determining the time-frequency resource of the PDCCH candidate included in the one or more second SSs based on the first information may be found in the related description of step S2103 in FIG. 2, which is not repeated here.

In some embodiments, steps S3101 and S3102 are implemented in combination, that is, step S3103 is an alternative step. For example, in a case that the SS set configured based on the first information only includes the first SS, step S3103 does not need to be executed.

In some embodiments, steps S3101 and S3103 are implemented in combination, that is, step S3102 is an alternative step. For example. In a case that the SS set configured based on the first information only includes the second SS, step S3102 does not need to be executed.

In some embodiments, after step S3101 is executed, steps S3102 and S3103 are executed respectively. At this time, steps S3102 and S3103 are not in a certain order. Step S3102 may be executed before step S3103. Steps S3102 and S3103 may be executed at the same time, or step S3103 may be executed before step S3102.

FIG. 4 is a flow chart illustrating an interaction of a method for processing a time-frequency resource of a PDCCH candidate according to an exemplary embodiment. As illustrated in FIG. 4, embodiments of the disclosure relate to the method for processing the time-frequency resource of the PDCCH candidate, which is executed by a terminal. The method includes the following.

At S4101, first information is sent.

In some embodiments, an access network device sends the first information.

In some embodiments, the access network device sends the first information to the terminal.

In other embodiments, the access network device receives the first information broadcasted, multicasted or unicasted.

For related descriptions such as the information content of the first information, please refer to the embodiments illustrated in FIG. 2.

In some embodiments, the method may also include:

determining time-frequency resources of PDCCH candidates included in a first SS and/or a second SS; and
generating the first information based on the time-frequency resources of the PDCCH candidates included in the first SS and/or the second SS.

The step of generating the first information may be executed by the access network device based on a configuration rule. In a word, the description of the first information generated by the access network device may refer to the embodiments illustrated in FIG. 2, which is not repeated here.

Taking a SBFD time domain unit as a SBFD symbol as an example, a configuration of a CORESET with an index m (that is, CORESET#m), an SS and a PDCCH candidate is described as follows:

In a case that an SS associated with the CORESET#m is in the SBFD symbol, the mapping of CCE-REG employs the non-interleaving mapping by default.

The CORESET#m configures two sets of parameters for a non-SBFD symbol and a SBFD symbol respectively.

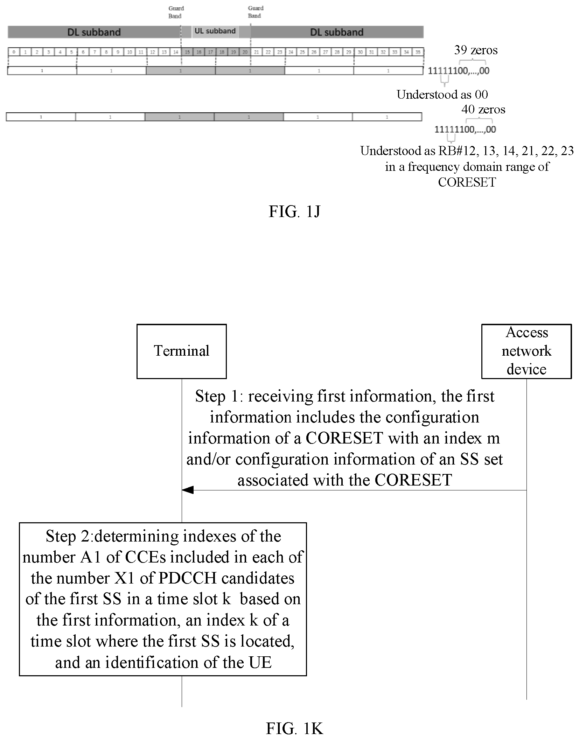

As illustrated in FIG. 1K, the method may include the following.

Step 1, first information is received, the first information may include the configuration information of a CORESET with an index m and/or configuration information of an SS set associated with the CORESET.

The SS set includes one or more first SSs. All symbols of the first SS are SBFD symbols, and the configuration information of the first SS includes a number X1 of PDCCH candidates with an aggregation level A1, and indexes of the number X1 of PDCCH candidates are 0~X1-1.

The time-frequency resources of the PDCCH candidates with the aggregation level A1 include a number A1 of CCEs.

The first information may include configuration information of the CORESET.

The configuration information of the CORESET includes a number Z1 of time domain units occupied by the first SS.

The SS set includes one or more second SSs. All symbols of the second SS are non-SBFD symbols, and the configuration information of the second SS includes a number X2 of PDCCH candidates with an aggregation level A2, and indexes of the number X2 of the PDCCH candidates are 0~X2-1.

The configuration information of the CORESET includes a number Z2 of time domain units occupied by the second SS.

m is an integer. A1 is a positive integer. X1 is a positive integer. Z1 is one of 1, 2 and 3. A2 is a positive integer. X2 is a positive integer. Z2 is one of 1, 2 and 3.

A2 is the same as or different from A1; and/or

X2 is the same as or different from X1; and/or
Z2 is the same as or different from Z1.

Step 2, indexes of the number A1 of CCEs included in each of the number X1 of PDCCH candidates of the first SS in a time slot k may be determined based on the first information, an index k of a time slot where the first SS is located, and an identification of the UE.

The time-frequency resource where any CCE in the first SS is located is determined based on the first information.

The time-frequency resources of the number X1 of PDCCH candidates are determined based on the time domain resource position of any CCE.

Solution 2-1:

The time-frequency position of the PDCCH candidate may be determined by the first SS in a non-interleaving manner, and the PDCCH is not detected on the PDCCH candidate when a frequency domain range of the PDCCH candidate overlaps with that outside the DL frequency domain range.

The interleaving manner of the first information configuration may be employed by the second SS to determine the time-frequency position where the PDCCH candidate is located.

In Solution 2-2 and Solution 2-3

The frequency domain range of the first SS is enabled to be located in the first frequency domain range, and it is ensured that CCE-REG may be mapped correctly.

The first frequency domain range may be the first frequency domain range is a frequency domain range overlapped by a frequency domain range of a BWP to which the CORESET belongs or a CFR of an MBS and a DL frequency domain range of a CC.

The frequency domain range of the second SS is enabled to be in the second frequency domain range, and it is ensured that CCE-REG may be mapped correctly.

The second frequency domain range may be located in the frequency domain range of the BWP to which the CORESET belongs or the MBS CFR.

The first information includes a first configuration for the first SS and a second configuration for the second SS.

The frequency domain range of the first SS is indicated by the first bit bitmap of the first configuration, and one bit of the first bit bitmap is used to indicate whether an RBG including 6 RBS belongs to the first SS.

The frequency domain range of the first SS is indicated by the second bit bitmap of the first configuration, and one bit of the second bit bitmap is used to indicate whether an RBG including 6 RBS belongs to the second SS.

Leftmost bits of the first bitmap and the second bitmap correspond to the first RBG in the BWP to which the CORESET belongs or the MBS CFR.

Solution 2-2:

The frequency domain ranges of the first SS and the second SS are configured differently. In this case, it is alternative that the size of the REG bundle and the size of interleaver may be configured differently, for the interleaving manner.

A configuration example of an SBFD symbol is as follows:

frequencyDomainResources_SBFD
reg-BundleSize_SBFD
interleaverSize_SBFD.

In a case that the size of the REG bundle is configured differently, the size of the REG bundle of the SBFD symbol is reg-BundleSize_SBFD, otherwise the size of the REG bundle by employing the non-SBFD symbol is reg-BundleSize.

In a case that the sizes of the interleavers are configured differently, the size of the interleaver of the SBFD symbol is interleaverSize_SBFD, otherwise, the size of the interleaver of the non-SBFD symbol is interleavedSize.

The frequency domain range configuration in the SBFD symbol may be determined as follows.

In Solution 2-2-1 and Solution 2-2-2:

In the first bit bitmap, all RBs in the RBG are in the first frequency domain range, and a bit value is 1 or 0, and/or in a case that all RBs in the RBG are not in the first frequency domain range, a bit value is 0.

In the second bit bitmap, all RBs in the RBG are in the second frequency domain range, and a bit value is 1 or 0, and/or in a case that all RBs in the RBG are not in the second frequency domain range, a bit value is 0.

Solution 2-2-1: RBs included in one RBG are continuous in the frequency domain.

As illustrated in a RBG configuration in A first row of FIG. 1I, RB#15-20 is outside the DL frequency domain range, and a bit corresponding to an RBG including the RB#15-20 needs to be 0. At this time, the frequency domain range corresponding to the SBFD symbol includes RB # 0-11 and 24-35, including 24 RBs in total.

Solution 2-2-2: RBs included in one RBG may be discontinuous in the frequency domain.

As illustrated in a RBG configuration in a second row of FIG. 1I, a third RBG includes RB#12, 13, 14, 21, 22, 23. At this time, the frequency domain range corresponding to the SBFD symbol includes RB#0~14, 21~35, including 30 RBS in total.

The first SS employs the interleaving manner. By Solution 2-2-1 and Solution 2-2-2, the first SS is enabled, $N_{REG}^{CORESET,3}/L_3$ and $C_3 = N_{REG}^{CORESET,3}/(L_3 R_3)$ are integers, where $N_{REG}^{CORESET,3}$ represents the number of REGs of the first SS, $L_3$ represents the size of the REG bundle, and $R_3$ represents the size of the interleaver.

$$N_{REG}^{CORESET,3} = N_{RB}^{CORESET,3} N_{symb}^{CORESET}$$

, where $N_{RB}^{CORESET,3}$ represents the number of RBs included in the frequency domain range of the first SS, and $N_{symb}^{CORESET}$ represents the number of symbols included in the first SS in the time domain.

In a case that the first SS uses the non-interleaving manner, the first SS is enabled by Solution 2-2-1 and Solution 2-2-2, $N_{REG}^{CORESET,3}/6$ is an integer.

Solution 2-3:

The frequency domain ranges of the first SS and the second SS are configured in a non-differentiated manner as follows.

Alternatively, differential configuration may be performed on the size of the REG bundle and the size of interleaver, for the interleaving manner.

A configuration example of the SBFD symbol is as follows:

reg-BundleSize_SBFD;
interleaverSize_SBFD.

In a case that the differential configuration is performed on the size of the REG bundle, the size of the REG bundle of the SBFD symbol is reg-BundleSize_SBFD, otherwise the preset size of the REG bundle by employing the non-SBFD symbol is reg-BundleSize.

In a case that the differential configuration is performed on the size of the interleaver, the size of the interleaver of the SBFD symbol is interleaverSize_SBFD, otherwise, the size of the interleaver of the non-SBFD symbol is interleavedSize.

A maximum frequency domain range of the first SS in the SBFD symbol may be determined as follows.

A third frequency domain range and a fourth frequency domain range are determined based on the second bit bitmap. In such case, the first information does not configure the frequency domain range of the first SS. Both the third frequency domain range and the fourth frequency domain range may be understood as the maximum frequency domain range of the first SS in different configurations. That is, the frequency domain range of the first SS may be a subset of the third frequency domain range or the fourth frequency domain range.

Solution 2-3-1: the third frequency domain range may be as follows.

An RBG with a value 1 in the second bitmap does not overlap with the frequency domain outside of the first frequency domain range, and the RBG is located in the third frequency domain range.

An RBG with a value 1 in the second bitmap overlaps with the frequency domain outside of the first frequency domain range, and the RBG is not located in the third frequency domain range.

An RBG with a value 0 in the second bitmap is not located in the third frequency domain range.

Solution 2-3-2: the fourth frequency domain range may be as follows.

An RBG with a value 1 in the second bitmap does not overlap with the frequency domain outside of the first frequency domain range, and the RBG is located in the fourth frequency domain range.

An RBG with a value 1 in the second bitmap overlaps with the frequency domain outside of the first frequency domain range, and an RB in the RBG overlapping with the first frequency domain range is in the fourth frequency domain range.

An RBG with a value 0 in the second bitmap is not located in the fourth frequency domain range.

The RBG configuration of the first row in FIG. 1J may be the configuration of Solution 2-3-1.

The RBG configuration of the second row in FIG. 1J may be the configuration of Solution 2-3-2.

In a case that the first SS employs the interleaving manners, the number of REGs included in the first SS is understood as $N_{REG}^{CORESET,4}$, and $N_{REG}^{CORESET,4}$ does not exceed $N_{REG}^{CORESET,3}$. $N_{REG}^{CORESET,4}/L_4$ and $C_4 = N_{REG}^{CORESET,4}/(L_4 R_4)$ ae enabled to be a maximum positive integer, where L represents a size of the REG bundle of the first SS, and R represents a size of the interleaver of the first SS. $N_{REG}^{CORESET,3}$ is the number of REG determined based on Solution 2-3-1 and Solution 2-3-2. Time-frequency resources of the number $N_{REG}^{CORESET,4}$ of REGs are: time-frequency resources of remained REGs after removing a number N4 of REGs with maximum REG indexes or a number N4 of REGs with minimum REG indexes from the number $N_{REG}^{CORESET,3}$ of REGs; and

For example, $N_{REG}^{CORESET,3} = 30$, $L = 2$, $R = 6$. When N4=6, $N_{REG}^{CORESET,4}/L$ and $C_4 = N_{REG}^{CORESET,4}/(LR)$ are enabled to be integers.

In a case that the first SS employs the non-interleaving manner, the number of REGs included in the first SS is understood as $N_{REG}^{CORESET,5}$. $N_{REG}^{CORESET,5}$ is a maximum positive integer which does not exceed $N_{REG}^{CORESET,3}$ and enables $N_{REG}^{CORESET,5}/6$ to be an integer. $N_{REG}^{CORESET,3}$ is the number of REG determined based on Solution 2-3-1 and Solution 2-3-2. Time-frequency resources of a number $N_{REG}^{CORESET,5}$ of REGs are: time-frequency resources of remained REGs after removing a number N5 of REGs with maximum REG indexes or a number N5 of REGs with minimum REG indexes from the number $N_{REG}^{CORESET,3}$ of REGs.

For example, $N_{REG}^{CORESET,3} = 30$. When N5=0, $N_{REG}^{CORESET,5}/6$ is enabled to be an integer.

In Solution 2-1, Solution 2-2 and Solution 2-3, the mapping rule between the REG and the CCE of the first SS may be different or the same as the mapping rule between the REG and CCE of the second SS.

The configuration of the SS may meet the following constraints.

The symbol where the first SS is located is the SBFD symbol, and the symbol where the second SS is located is the non-SBFD symbol.

Base station side: a detailed method is as described in the terminal side, which is not repeated here.

In short, CCE-REG employs the non-interleaving manner by default when the SS associated with the CORESET#m is in the SBFD symbol; and/or the CORESET#m configures two sets of parameters for the non-SBFD symbol and the SBFD symbol respectively.

Embodiments of the disclosure also provide an apparatus for implementing any one of the above methods. For example, an apparatus is provided, including units or modules for performing the steps executed by the terminal in any one of the above methods. Furthermore, another apparatus is provided, including units or modules for performing the steps executed by the network device (e.g., an access network device, a core network device, etc.) in any one of the above methods.

It should be understood that a division of units in the above apparatus is only a division of logical functions. In actual implementations, they may be fully or partially integrated into one physical entity, or may be physically separated. In addition, the units or the modules in the apparatus may be implemented in the form of software called by the processor. For example, the apparatus includes a processor, in which the processor is connected to a memory storing instructions. The processor calls the instructions stored in the memory to implement any one of the above methods or to implement functions of the units or the modules of the above apparatus. The processor is, for example, a general-purpose processor, such as a central processing unit (CPU) or a microprocessor, and the memory is a memory inside the apparatus or a memory outside the apparatus. Or, the units or the modules in the apparatus may be implemented in the form of a hardware circuit. The functions of some or all units or modules may be implemented by designing the hardware circuit. The hardware circuit may be understood as one or more processors. For example, in an implementation, the hardware circuit is an application specific integrated circuit (ASIC). The functions of some or all units or modules are implemented by designing logical relationships of components within the circuit. In another implementation, the hardware circuit may be implemented by a programmable logic device (PLD). Taking a field-programmable gate array (FPGA) as an example, it may include a large number of logic gate circuits. The connection relationships between the logic gate circuits are configured via profiles to implement the functions of some or all units or modules. All units or modules of the above apparatus may be fully implemented in the form of software called by the processor, or fully implemented in the form of the hardware circuit, or partially implemented in the form of software called by the processor and partially implemented in the form of the hardware circuit.

In embodiments of the disclosure, the processor is a circuit with a signal processing capability. In an implementation, the processor may be a circuit with a capability to read and run instructions, such as a CPU, a microprocessor, a graphics processing unit (GPU) (which may be understood as a type of the microprocessor), a digital signal processor (DSP), etc. In another implementation, the processor may implement functions via a logical relationship of hardware circuits. The logical relationship of the hardware circuit is fixed or reconstructed, for example, a hardware circuit implemented by the ASIC or the PLD, such as the FPGA. In the reconstructed hardware circuit, a process that the processor loads the profiles to implement a hardware circuit configuration may be understood as a process that the processor loads the instructions to implement the functions of some or all units. Furthermore, it may also be a hardware circuit designed for artificial intelligence, which may be understood as a type of ASIC, such as a neural network processing unit (NPU), a tensor processing unit (TPU), a deep learning processing unit (DPU), etc.

FIG. 5 is a block diagram illustrating a terminal according to an exemplary embodiment. As illustrated in FIG. 5, the terminal provided in embodiments of the disclosure includes:

a receiving module 501, configured to receive first information, in which the first information indicates time-frequency resources of an SS set, a time domain unit where one or more first SSs in the SS set are located is an SBFD time domain unit; and
a processing module 502, configured to determine a time-frequency resource of a PDCCH candidate included in the one or more first SSs based on the first information.

Alternatively, the receiving module 501 may be configured to perform the steps related to information reception and performed by the terminal in any of the above methods for processing the time-frequency resource of the PDCCH candidate, which is not repeated here. The terminal may further include a transmitting module configured to perform uplink transmission.

In some embodiments, the terminal may include one or more processing modules 502. The processing modules 502 may be configured to perform information processing.

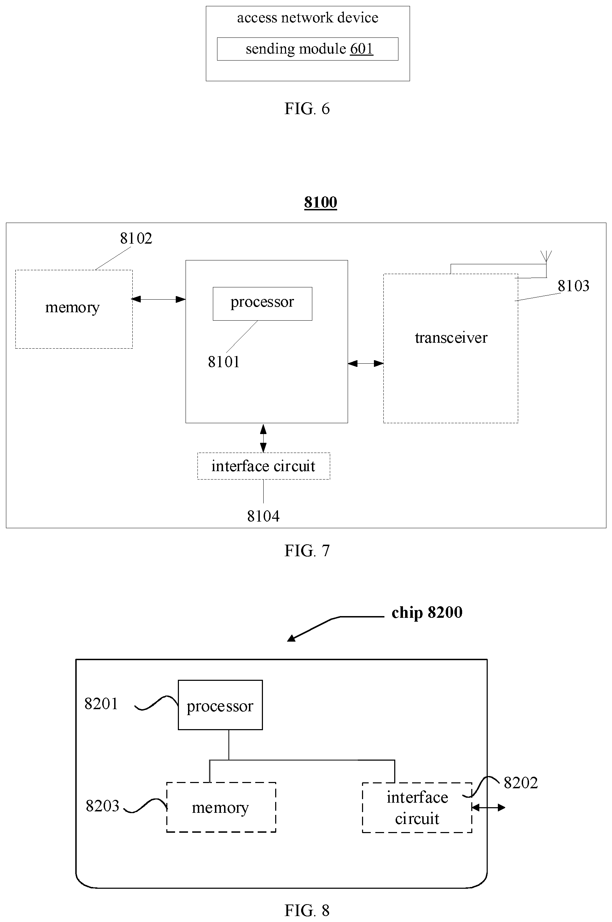

FIG. 6 is a block diagram illustrating an access network device according to an exemplary embodiment. As illustrated in FIG. 6, the access network device provided in embodiments of the disclosure includes:
a sending module 601, configured to send first information, in which the first information at least indicates a time-frequency resource of a PDCCH candidate included in an SS set; a time domain unit where one or more first SSs in the SS set are located is an SBFD time domain unit.

Alternatively, the sending module 601 may execute any one of the sending actions executed by the access network device.

In some embodiments, the access network device also includes one or more processing modules. The processing module may be used for information processing.

In other embodiments, the access network device may also include one or more receiving modules. The receiving module may be configured to receive the uplink transmission of the terminal.

FIG. 7 is a block diagram illustrating a communication device 8100 according to an exemplary embodiment. The communication device 8100 may be a terminal and a network device (such as an access network device, or a core network device, etc.), or a UE (such as a UE, etc.), or a chip, a chip system, a processor, etc. that supports the network device to implement any one of the methods, or a chip, a chip system, a processor, etc. that supports the terminal to implement any one of the methods for processing the time-frequency resource of the PDCCH candidate. The communication device 8100 may be configured to implement the method for processing the time-frequency resource of the PDCCH candidate in the above method embodiments. For details, please refer to the description in the above method embodiments.

As illustrated in FIG. 7, the communication device 8100 may include one or more processors 8101. The processor 8101 may be a general purpose processor or a special purpose processor, such as, a baseband processor or a central processing unit. The baseband processor may be configured to process communication protocols and communication data, and the central processing unit may be configured to control communication apparatuses (such as a base station, a baseband chip, a UE, a UE chip, a DU or a CU, etc.), execute computer programs, and process computer program data. The processor 8101 is configured to call instructions to cause the communication device 8100 to execute any one of the above methods for processing the time-frequency resource of the PDCCH candidate.

In some embodiments, the communication device 8100 also includes one or more memories 8102 for storing instructions. Alternatively, all or some of the memories 8102 may also be located outside the communication device 8100. The memory 8102 stores instructions for the processor 8101 to call.

In some embodiments, the communication device 8100 also includes one or more transceivers 8103. When the communication device 8100 includes one or more transceivers 8103, the transceiver 8103 performs at least one of the communication steps such as sending and/or receiving in the above method, and the processor 8101 performs at least one of other steps.

In some embodiments, the transceiver may include a receiver and a transmitter, which may be separate or integrated together. Alternatively, terms such as transceiver, transceiver unit, transceiver machine, transceiving circuit, etc. may be used interchangeably; terms such as transmitter, transmission unit, transmission machine, transmitting circuit, etc. may be used interchangeably; and terms such as receiver, reception unit, reception machine, receiving circuit, etc. may be used interchangeably.

Alternatively, the communication device 8100 also includes one or more interface circuits 8104. The interface circuit 8104 is connected to the memory 8102. The interface circuit 8104 may be configured to receive signals from the memory 8102 or other devices, and may be configured to send signals to the memory 8102 or other devices. For example, the interface circuit 8104 may read instructions stored in the memory 8102 and send the instructions to the processor 8101.

The communication device 8100 in the above embodiments may be a network device or a UE, but a scope of the communication device 8100 in the disclosure is not limited to this, and a structure of the communication device 8100 may not be limited by FIG. 8A. The communication device may be an independent device or a part of a larger device. For example, the communication device may be: 1) an independent IC, or a chip, or a chip system or a subsystem; 2) a collection including one or more IC, alternatively, the IC collection including storage components for storing data and computer programs; 3) an ASIC, such as a modem; 4) modules embedded in other devices; 5) a receiver, a UE, an intelligent UE, a cellular phone, a wireless device, a handheld phone, a mobile unit, a vehicle-mounted device, a network device, a cloud device, an artificial intelligence device, etc.; 6) others.

FIG. 8b is a block diagram illustrating a chip 8200 according to an embodiment of the disclosure. For a case where the communication device 8100 may be a chip or a chip system, reference may be made to the block diagram of the chip 8200 illustrated in FIG. 8, but not limited to this.

The chip 8200 includes one or more processors 8201. The chip 8200 is configured to call instructions to enable the chip 8200 to execute any one of the above methods for processing the time-frequency resource of the PDCCH candidate.

In some embodiments, the chip 8200 also includes one or more interface circuits 8202. The interface circuit 8202 is connected to a memory 8203. The interface circuit 8202 may be configured to receive signals from the memory 8203 or other devices, and may be configured to send signals to the memory 8203 or other devices. For example, the interface circuit 8202 may read the instructions stored in the memory 8203 and send the instructions to the processor 8201. Alternatively, the terms such as the interface circuit, the interface, the transceiver pin, the transceiver, etc. may be used interchangeably.

In some embodiments, the chip 8200 also includes one or more memories 8203 for storing instructions. Alternatively, all or some of the memory 8203 may be outside the chip 8200.

The disclosure also provides a storage medium for storing instructions. When the instructions are running on the communication device 8100, the communication device 8100 is caused to perform any one of the above methods. Alternatively, the above storage medium is an electronic storage medium. Alternatively, the above storage medium is a computer-readable storage medium, which is not limited to this, and the above storage medium may also be a storage medium readable by other devices. Alternatively, the above storage medium may be a non-transitory storage medium, and may also be a transitory storage medium.

The disclosure also provides a program product. When the program product is executed by the communication device 8100, the communication device 8100 is caused to implement any one of the above methods for processing the time-frequency resource of the PDCCH candidate. Alternatively, the above program product is a computer program product.

The disclosure also provides a computer program. When the computer program is run on a computer, the computer is caused to implement any one of the above methods for processing the time-frequency resource of the PDCCH candidate.

Other implementations of the disclosure may be apparent to those skilled in the art from consideration of the specification and practice of the disclosure disclosed here. The disclosure is intended to cover any variations, uses, or adaptations of the disclosure following the general principles thereof and including such departures from the disclosure as come within known or customary practice in the art. It is intended that the specification and embodiments are considered as exemplary only, with a true scope and spirit of embodiments the disclosure being indicated by the following claims.

It will be appreciated that embodiments of the disclosure are not limited to the exaction construction that has been described above and illustrated in the accompanying drawings, and that various modifications and changes may be made without departing from the scope thereof. It is intended that the scope of the disclosure only be limited by the appended claims.

**Claims**

1. A method for processing a time-frequency resource of a physical downlink control channel (PDCCH) candidate, comprising:

   receiving, by a terminal, first information, wherein the first information indicates time-frequency resources of a search space (SS) set, a time domain unit where one or more first SSs in the SS set are located is a subband full duplex (SBFD) time domain unit; and
   determining a time-frequency resource of a PDCCH candidate comprised in the one or more first SSs based on the first information.

2. The method of claim 1, wherein the first information comprises at least one of:

   configuration information of a control resource set (CORESET) with an index m; a value of m being a positive integer;
   configuration information of an SS set associated with the CORESET; or
   a frequency domain range available for a DL transmission on a carrier component (CC) in the SBFD time domain unit;
   wherein the configuration information of the CORESET indicates that the first SS occupies a number Z1 of time domain units in a time domain;
   the configuration information of the SS set indicates that a number of PDCCH candidates with an aggregation level A1 comprised in the first SS is X1, and indexes of the number X1 of PDCCH candidates are 0 to X1-1;
   time-frequency resources of the PDCCH candidates with the aggregation level A1 comprise a number A1 of control channel elements (CCEs);
   A1 is a positive integer;
   X1 is a positive integer; and
   Z1 is one of 1, 2 and 3.

3. The method of claim 2, wherein determining the time-frequency resource of the PDCCH candidate comprised in the one or more first SSs based on the first information comprises:

   determining an index k of a time slot where the first SS is located based on the first information;
   determining an index of a CCE comprised in each PDCCH candidate located on the time slot with the index k based on the index k of the time slot where the first SS is located and an identification of the terminal;
   determining a time-frequency resource of any CCE comprised in the first SS based on the first information; and
   determining the time-frequency resources of the number X1 of PDCCH candidates based on the index of the CCE comprised in each PDCCH.

4. The method of claim 2, wherein,

   a time domain unit where one or more second SSs in the SS set are located is a non-SBFD time domain unit, and a number of PDCCH candidates with an aggregation level A2 comprised in a second SS is X2;
   the configuration information of the CORESET indicates that the second SS in the SS set occupies a number Z2 of time domain units in the time domain;
   A2 is a positive integer;
   X2 is a positive integer;

Z2 is one of 1, 2 and 3;
A2 is the same as or different from A1; and/or
X2 is the same as or different from X1; and/or
Z2 is the same as or different from Z1.

5. The method of claim 1, wherein

the SBFD time domain unit is a time domain unit comprising a downlink (DL) subband and an uplink (UL) subband in a frequency domain; and/or
a non-SBFD time domain unit is a DL time domain unit, a UL time domain unit or a flexible time domain unit.

6. The method of claim 5, wherein
the SBFD time domain unit comprises a guard band (GB) in the frequency domain, and the GB is located between the DL subband and the UL subband.

7. The method of claim 4, wherein a first manner is used to determine the time-frequency resource of the PDCCH candidate comprised in the first SS, wherein the first manner comprises a non-interleaving manner; and
a second manner is used to determine the time-frequency resource of the PDCCH candidate comprised in the second SS, wherein the second manner is one of an interleaving manner and the non-interleaving manner, and the configuration information of the CORESET also indicates the second manner.

8. The method of any one of claims 1 to 7, wherein the first information is used to enable a frequency domain range of the first SS to be located in a first frequency domain range and to enable that a first condition is met when the CCE of the first SS is mapped to a resource element group (REG).

9. The method of claim 8, wherein the first frequency domain range is a frequency domain range of a bandwidth part (BWP) to which the CORESET belongs or a common frequency resource (CFR) of a multicast broadcast service (MBS), for the DL transmission in the SBFD time domain unit.

10. The method of claim 4, wherein the first information is used to enable a frequency domain range of the second SS in a second frequency domain range, and to enable that a second condition is met when the CCE of the second SS is mapped to an REG.

11. The method of claim 10, wherein,
the second frequency domain range is a frequency domain range of a BWP to which the CORESET belongs or a CFR of an MBS.

12. The method of claim 4, wherein the first information comprises:

a first configuration for configuration of the first SS; and
a second configuration for configuration of the second SS.

13. The method of claim 12, wherein, for determining the time-frequency resource of the PDCCH candidate by employing an interleaving manner or a non-interleaving manner, a frequency domain range of the first SS indicated by the first configuration is different from a frequency domain range of the second SS indicated by the second configuration.

14. The method of claim 12, wherein a frequency domain range of the first SS is indicated by a first bit bitmap of the first configuration, wherein one bit in the first bit bitmap indicates whether a resource block group (RBG) comprising six resource blocks (RBs) belongs to the frequency domain range of the first SS.

15. The method of claim 12, wherein a frequency domain range of the second SS is indicated by a second bit bitmap of the second configuration, wherein one bit in the second bit bitmap indicates whether an RBG comprises six RBs belongs to the frequency domain range of the second SS.

16. The method of claim 14 or 15, wherein the frequency domain range of the first SS of the first configuration is different from the frequency domain range of the second SS of the second configuration;

each RB of one RBG is located in the frequency domain range of the first SS, and a bit in the first bit bitmap has a first value or a second value;

each RB of one RBG is located in the frequency domain range of the second SS, and a bit in the second bit bitmap has a first value or a second value;

at least one RB of one RBG is located outside the frequency domain range of the first SS, and a bit in the first bit bitmap has a second value;

at least one RB of one RBG is located outside the frequency domain range of the second SS, and a bit in the second bit bitmap has a second value;

a first RB in an RBG corresponding to a first bit of the first bit bitmap is a first RB in a second frequency domain range; and

a first RB in an RBG corresponding to a first bit of the second bit bitmap is the first RB in the second frequency domain range;

wherein the second value is different from the first value.

**17.** The method of any one of claims 14 to 16, wherein,

RBs comprised in one RBG are continuously distributed in a frequency domain;

or

RBs comprised in one RBG is capable of being discontinuously distributed in a frequency domain.

**18.** The method of claim 8, wherein

for the interleaving manner, the first condition is that:

$$N_{REG}^{CORESET,3}/L_3$$

is a positive integer;

$$C_3 = N_{REG}^{CORESET,3}/(L_3 R_3)$$

is a positive integer; and

for the non-interleaving manner, the first condition is that:

$$N_{REG}^{CORESET,3}/6$$

is a positive integer,

where $N_{REG}^{CORESET,3}$ represents a number of REGs comprised in the time-frequency resources of the first SS;

$$N_{REG}^{CORESET,3} = N_{RB}^{CORESET,3} N_{symb}^{CORESET},$$

$N_{RB}^{CORESET,3}$ represents a number of RBs comprised in the frequency domain range of the first SS;

$N_{symb}^{CORESET}$ represents the number Z1 of time domain units comprised in the first SS;

$L_3$ represents a size of an REG bundle of the first SS; and

$R_3$ represents a size of an interleaver of the first SS.

**19.** The method of claim 10, wherein

for the interleaving manner, the second condition is that:

$$N_{REG}^{CORESET,3}/L_3$$

is a positive integer;

$$C_3 = N_{REG}^{CORESET,3}/(L_3 R_3)$$

is a positive integer; and
for the non-interleaving manner, the second condition is that:

$$N_{REG}^{CORESET,3}/6$$

is a positive integer,

where $N_{REG}^{CORESET,3}$ represents a number of REGs comprised in the time-frequency resources of the second SS,

$$N_{REG}^{CORESET,3} = N_{RB}^{CORESET,3} N_{symb}^{CORESET},$$

$N_{RB}^{CORESET,3}$ represents a number of RBs comprised in the frequency domain range of the second SS;

$N_{symb}^{CORESET}$ represents the number Z2 of time domain units compri sed in the second SS;
$L_3$ represents a size of an REG bundle of the second SS; and
$R_3$ represents a size of an interleaver of the second SS.

20. The method of claim 12, wherein, for the interleaving manner, the first configuration indicates a preset size of an REG bundle of the first SS, and the first SS uses the preset size of the REG bundle; and/or
for the interleaving manner, the first configuration does not indicate the preset size of the REG bundle of the first SS, and the first SS uses a preset size of an REG bundle indicated by the second configuration.

21. The method of claim 12, wherein, for the interleaving manner, the first configuration indicates a preset size of an interleaver of the first SS, the first SS uses the preset size of the interleaver, and/or
for the interleaving manner, the first configuration does not indicate the preset size of the interleaver of the first SS, and the first SS uses a preset size of an interleaver indicated by the second configuration.

22. The method of claim 12 or 15, wherein the second configuration comprises a frequency domain range configuration of the second SS;

each RB of one RBG is located in the frequency domain range of the second SS, and a bit in the second bit bitmap has a first value;
at least one RB of one RBG is located outside the frequency domain range of the second SS, and a bit in the second bit bitmap has a second value,
a first RB in an RBG corresponding to a first bit of the second bit bitmap is a first RB in the second frequency domain range; and
the second value is different from the first value.

23. The method of claim 22, wherein a first bit bitmap of the first configuration is a default, and the second bit bitmap is reused to determine a third frequency domain range; a frequency domain range of the first SS is a subset of the third frequency domain range;

in a case that the second bit bitmap has the bit with the first value and a third condition is met, an RBG corresponding to the bit with the first value is located in the third frequency domain range;
in a case that the second bit bitmap has the bit with the first value and the third condition is not met, the RBG corresponding to the bit with the first value is not located in the third frequency domain range; and
in a case that the second bit bitmap has the bit with the second value, an RBG corresponding to the bit with the second value is not located in the third frequency domain range.

24. The method of claim 23, wherein the third condition is that the RBG corresponding to the bit with the first value in the second bit bitmap is located in a first frequency domain range; the first frequency domain range is: a frequency domain range of a BWP to which the CORESET belongs or a CFR of a MBS, for the DL transmission in the SBFD time domain unit.

**25.** The method of claim 22, wherein a first bit bitmap of the first configuration is a default, and the second bit bitmap is reused to determine a fourth frequency domain range; a frequency domain range of the first SS is a subset of the fourth frequency domain range;

in a case that the second bit bitmap has the bit with the first value and a fourth condition is met, an RB belonging to a first frequency domain range in an RBG corresponding to the bit with the first value is located in the fourth frequency domain range;

in a case that the second bit bitmap has the bit with the first value and the fourth condition is not met, the RBG corresponding to the bit with the first value is not located in the fourth frequency domain range; and

in a case that the second bit bitmap has the bit with the second value, the RBG corresponding to the bit with the second value is not located in the fourth frequency domain range.

**26.** The method of claim 25, wherein the fourth condition is that:

some or all of the RBG corresponding to the bit with the first value in the second bit bitmap is located in the first frequency domain range, wherein the first frequency domain range is: a frequency domain range of a BWP to which the CORESET belongs or a CFR of an MBS, for the DL transmission in the SBFD time domain unit.

**27.** The method of any one of claims 22 to 26, wherein

the number of REGs comprised in the first SS does not exceed $N_{REG}^{CORESET,3}$;

$N_{REG}^{CORESET,3}$ represents a maximum number of REGs comprised in the first SS;

$$N_{REG}^{CORESET,3} = N_{RB}^{CORESET,3} N_{symb}^{CORESET};$$

$N_{RB}^{CORESET,3}$ represents a number of RBs comprised in the third frequency domain range or the fourth frequency domain range; and

$N_{symb}^{CORESET}$ represents the number Z1 of time domain units occupied by the first SS.

**28.** The method of claim 20, or 21 or 27, wherein, for the interleaving manner, the number of REGs of the first SS is

$N_{REG}^{CORESET,4}$, and $N_{REG}^{CORESET,4}$ has the following characteristic that:

$$N_{REG}^{CORESET,4}/L_4$$

is a maximum positive integer in a value range of $N_{REG}^{CORESET,4}$;

$$C_4 = N_{REG}^{CORESET,4}/(L_4 R_4)$$

is a maximum positive integer in the value range of $N_{REG}^{CORESET,4}$,

where $L_4$ represents a size of the REG bundle of the first SS, and $R_4$ represents a size of the interleaver of the first SS;

and/or

for the non-interleaving manner, the number of REGs of the first SS is $N_{REG}^{CORESET,5}$, and $N_{REG}^{CORESET,5}$ has the following characteristic that:

$$N_{REG}^{CORESET,5}/6$$

is a maximum positive integer in a value range of $N_{REG}^{CORESET,5}$.

**29.** The method of claim 28, wherein

time-frequency resources of a number $N_{REG}^{CORESET,4}$ of REGs are: time-frequency resources of remained REGs after removing a number N4 of REGs with maximum REG indexes or a number N4 of REGs with minimum REG indexes from a number $N_{REG}^{CORESET,3}$ of REGs; and

time-frequency resources of a number $N_{REG}^{CORESET,5}$ of REGs are: time-frequency resources of remained REGs after removing a number N5 of REGs with maximum REG indexes or a number N5 of REGs with minimum REG indexes from the number $N_{REG}^{CORESET,3}$ of REGs.

**30.** The method of any one of claims 4 to 29, wherein a mapping rule between the REG and the CCE of the first SS is different from that between the REG and CCE of the second SS;
or
a mapping rule between the REG and the CCE of the first SS is the same as that between the REG and CCE of the second SS.

**31.** The method of any one of claims 4 to 29, wherein the time domain unit where the first SS is located is the SBFD time domain unit, and the time domain unit where the second SS is located is the non-SBFD time domain unit.

**32.** A method for processing a time-frequency resource of a physical downlink control channel (PDCCH) candidate, comprising:

sending, by an access network device, first information, wherein the first information at least indicates a time-frequency resource of a PDCCH candidate comprised in a search space (SS) set; and
a time domain unit where one or more first SSs in the SS set are located is a subband full duplex (SBFD) time domain unit.

**33.** The method of claim 32, wherein the first information comprises at least one of:

configuration information of a control resource set (CORESET) with an index m; a value of m being a positive integer;
configuration information of an SS set associated with the CORESET; or
a frequency domain range available for a DL transmission on a carrier component (CC) in the SBFD time domain unit;
wherein the configuration information of the CORESET indicates that the first SS occupies a number Z1 of time domain units in a time domain;
the configuration information of the SS set indicates that a number of PDCCH candidates with an aggregation level A1 comprised in the first SS is X1, and indexes of the number X1 of PDCCH candidates are 0 to X1-1;
time-frequency resources of the PDCCH candidates with the aggregation level A1 comprise a number A1 of control channel elements (CCEs);
A1 is a positive integer;
X1 is a positive integer; and
Z1 is one of 1, 2 and 3.

**34.** The method of claim 33, further comprising:

determining an index k of a time slot where the first SS is located based on the first information;
determining an index of a CCE comprised in each PDCCH candidate located on the time slot with the index k based on the index k of the time slot where the first SS is located and an identification of the terminal;
determining a time-frequency resource of any CCE comprised in the first SS based on the first information; and
determining the time-frequency resources of the number X1 of PDCCH candidates based on the index of the CCE comprised in each PDCCH.

**35.** The method of claim 34, wherein,

a time domain unit where one or more second SSs in the SS set are located is a non-SBFD time domain unit, and a number of PDCCH candidates with an aggregation level A2 comprised in a second SS is X2;
the configuration information of the CORESET indicates that the second SS in the SS set occupies a number Z2 of time domain units in the time domain;
A2 is a positive integer;
X2 is a positive integer;
Z2 is one of 1, 2 and 3;
A2 is the same as or different from A1; and/or
X2 is the same as or different from X1; and/or
Z2 is the same as or different from Z1.

**36.** The method of claim 32, wherein

the SBFD time domain unit is a time domain unit comprising a downlink (DL) subband and an uplink (UL) subband in a frequency domain; and/or
a non-SBFD time domain unit is a time domain unit not comprising the DL subband and the UL subband in the frequency domain.

**37.** The method of claim 36, wherein
the SBFD time domain unit comprises a guard band (GB) in the frequency domain, and the GB is located between the DL subband and the UL subband.

**38.** The method of claim 35, wherein a first manner is used to determine the time-frequency resource of the PDCCH candidate comprised in the first SS, wherein the first manner comprises a non-interleaving manner; and
a second manner is used to determine the time-frequency resource of the PDCCH candidate comprised in the second SS, wherein the second manner is one of an interleaving manner and the non-interleaving manner, and the configuration information of the CORESET also indicates the second manner.

**39.** The method of any one of claims 32 to 38, wherein the first information is used to enable a frequency domain range of the first SS to be located in a first frequency domain range and to enable that a first condition is met when the CCE of the first SS is mapped to a resource element group (REG).

**40.** The method of claim 39, wherein the first frequency domain range is a frequency domain range of a bandwidth part (BWP) to which the CORESET belongs or a common frequency resource (CFR) of a multicast broadcast service (MBS), for the DL transmission in the SBFD time domain unit.

**41.** The method of claim 35, wherein the first information is used to enable a frequency domain range of the second SS in a second frequency domain range, and to enable that a second condition is met when the CCE of the second SS is mapped to an REG.

**42.** The method of claim 41, wherein,
the second frequency domain range is a frequency domain range of a BWP to which the CORESET belongs or a CFR of an MBS.

**43.** The method of claim 35, wherein the first information comprises:

a first configuration for configuration of the first SS; and
a second configuration for configuration of the second SS.

**44.** The method of claim 43, wherein, for determining the time-frequency resource of the PDCCH candidate by employing an interleaving manner or a non-interleaving manner, a frequency domain range of the first SS indicated by the first configuration is different from a frequency domain range of the second SS indicated by the second configuration.

**45.** The method of claim 43, wherein a frequency domain range of the first SS is indicated by a first bit bitmap of the first configuration, wherein one bit in the first bit bitmap indicates whether a resource block group (RBG) comprising six resource blocks (RBs) belongs to the frequency domain range of the first SS.

**46.** The method of claim 43, wherein a frequency domain range of the second SS is indicated by a second bit bitmap of the second configuration, wherein one bit in the second bit bitmap indicates whether an RBG comprises six RBs belongs to the frequency domain range of the second SS.

**47.** The method of claim 45 or 46, wherein the frequency domain range of the first SS of the first configuration is different from the frequency domain range of the second SS of the second configuration;

each RB of one RBG is located in the frequency domain range of the first SS, and a bit in the first bit bitmap has a first value or a second value;
each RB of one RBG is located in the frequency domain range of the second SS, and a bit in the second bit bitmap has a first value or a second value;
at least one RB of one RBG is located outside the frequency domain range of the first SS, and a bit in the first bit bitmap has a second value;
at least one RB of one RBG is located outside the frequency domain range of the second SS, and a bit in the second bit bitmap has a second value;
a first RB in an RBG corresponding to a first bit of the first bit bitmap is a first RB in a second frequency domain range; and
a first RB in an RBG corresponding to a first bit of the second bit bitmap is the first RB in the second frequency domain range;
wherein the second value is different from the first value.

**48.** The method of any one of claims 45 to 47, wherein,

RBs comprised in one RBG are continuously distributed in a frequency domain;
or
RBs comprised in one RBG is capable of being discontinuously distributed in a frequency domain.

**49.** The method of claim 40, wherein
for the interleaving manner, the first condition is that:

$$N_{REG}^{CORESET,3}/L_3$$

is a positive integer;

$$C_3 = N_{REG}^{CORESET,3}/(L_3 R_3)$$ is a positive integer; and

for the non-interleaving manner, the first condition is that:

$$N_{REG}^{CORESET,3}/6$$

is a positive integer,

where $N_{REG}^{CORESET,3}$ represents a number of REGs comprised in the time-frequency resources of the first SS;

$$N_{REG}^{CORESET,3} = N_{RB}^{CORESET,3} N_{symb}^{CORESET};$$

$N_{RB}^{CORESET,3}$ represents a number of RBs comprised in the frequency domain range of the first SS;

$N_{symb}^{CORESET}$ represents the number Z1 of time domain units comprised in the first SS;

$L_3$ represents a size of an REG bundle of the first SS; and
$R_3$ represents a size of an interleaver of the first SS.

**50.** The method of claim 41, wherein
for the interleaving manner, the second condition is that:

$$N_{REG}^{CORESET,3}/L_3$$

is a positive integer;

$$C_3 = N_{REG}^{CORESET,3}/(L_3 R_3) \quad \text{is a positive integer; and}$$

for the non-interleaving manner, the second condition is that:

$N_{REG}^{CORESET,3}/6$ is a positive integer,

where $N_{REG}^{CORESET,3}$ represents a number of REGs comprised in the time-frequency resources of the second SS,

$$N_{REG}^{CORESET,3} = N_{RB}^{CORESET,3} N_{symb}^{CORESET};$$

$N_{RB}^{CORESET,3}$ represents a number of RBs comprised in the frequency domain range of the second SS;

$N_{symb}^{CORESET}$ represents the number Z2 of time domain units comprised in the second SS;

$L_3$ represents a size of an REG bundle of the second SS; and

$R_3$ represents a size of an interleaver of the second SS.

51. The method of claim 43, wherein, for the interleaving manner, the first configuration indicates a preset size of an REG bundle of the first SS, and the first SS uses the preset size of the REG bundle; and/or
for the interleaving manner, the first configuration does not indicate the preset size of the REG bundle of the first SS, and the first SS uses a preset size of an REG bundle indicated by the second configuration.

52. The method of claim 43, wherein, for the interleaving manner, the first configuration indicates a preset size of an interleaver of the first SS, the first SS uses the preset size of the interleaver, and/or
for the interleaving manner, the first configuration does not indicate the preset size of the interleaver of the first SS, and the first SS uses a preset size of an interleaver indicated by the second configuration.

53. The method of claim 43 or 46, wherein the second configuration comprises a frequency domain range configuration of the second SS;

each RB of one RBG is located in the frequency domain range of the second SS, and a bit in the second bit bitmap has a first value;
at least one RB of one RBG is located outside the frequency domain range of the second SS, and a bit in the second bit bitmap has a second value,
a first RB in an RBG corresponding to a first bit of the second bit bitmap is a first RB in the second frequency domain range; and
the second value is different from the first value.

54. The method of claim 53, wherein

in a case that the second bit bitmap has the bit with the first value and a third condition is met, an RBG corresponding to the bit with the first value is located in a third frequency domain range;
in a case that the second bit bitmap has the bit with the first value and the third condition is not met, the RBG corresponding to the bit with the first value is not located in the third frequency domain range; and
in a case that the second bit bitmap has the bit with the second value, an RBG corresponding to the bit with the second value is not located in the third frequency domain range.

55. The method of claim 54, wherein the third condition is that the RBG corresponding to the bit with the first value in the second bit bitmap is located in a first frequency domain range.

56. The method of claim 53, wherein in a case that the second bit bitmap has the bit with the first value and a fourth condition is met, an RB belonging to a first frequency domain range in an RBG corresponding to the bit with the first value is located in a fourth frequency domain range;

in a case that the second bit bitmap has the bit with the first value and the fourth condition is not met, the RBG corresponding to the bit with the first value is not located in the fourth frequency domain range; and
in a case that the second bit bitmap has the bit with the second value, the RBG corresponding to the bit with the second value is not located in the fourth frequency domain range.

57. The method of claim 56, wherein the fourth condition is that:
some or all of the RBG corresponding to the bit with the first value in the second bit bitmap is located in the first frequency domain range.

58. The method of any one of claims 53 to 57, wherein

the number of REGs comprised in the first SS does not exceed $N_{REG}^{CORESET,3}$ ;

$N_{REG}^{CORESET,3}$ represents a maximum number of REGs comprised in the first SS;

$$N_{REG}^{CORESET,3} = N_{RB}^{CORESET,3} N_{symb}^{CORESET};$$

$N_{RB}^{CORESET,3}$ represents a number of RBs comprised in the third frequency domain range or the fourth frequency domain range; and

$N_{symb}^{CORESET}$ represents the number Z1 of time domain units occupied by the first SS.

59. The method of claim 56, or 57 or 58, wherein, for the interleaving manner, the number of REGs of the first SS is $N_{REG}^{CORESET,4}$ , and $N_{REG}^{CORESET,4}$ has the following characteristic that:

$$N_{REG}^{CORESET,4}/L_4$$

is a maximum positive integer in a value range of $N_{REG}^{CORESET,4}$ ;

$$C_4 = N_{REG}^{CORESET,4}/(L_4 R_4)$$

is a maximum positive integer in the value range of $N_{REG}^{CORESET,4}$ ,
where $L_4$ represents a size of the REG bundle of the first SS, and $R_4$ represents a size of the interleaver of the first SS;
and/or
for the non-interleaving manner, the number of REGs of the first SS is $N_{REG}^{CORESET,5}$ , and $N_{REG}^{CORESET,5}$ has the following characteristic that:

$$N_{REG}^{CORESET,5}/6$$

is a maximum positive integer in a value range of $N_{REG}^{CORESET,5}$ .

60. The method of claim 59, wherein

time-frequency resources of a number $N_{REG}^{CORESET,4}$ of REGs are: time-frequency resources of remained REGs after removing a number N4 of REGs with maximum REG indexes or a number N4 of REGs with minimum REG indexes from a number $N_{REG}^{CORESET,3}$ of REGs; and

time-frequency resources of a number $N_{REG}^{CORESET,5}$ of REGs are: time-frequency resources of remained REGs after removing a number N5 of REGs with maximum REG indexes or a number N5 of REGs with minimum REG indexes from the number $N_{REG}^{CORESET,3}$ of REGs.

61. The method of any one of claims 35 to 60, wherein a mapping rule between the REG and the CCE of the first SS is different from that between the REG and CCE of the second SS;
or
a mapping rule between the REG and the CCE of the first SS is the same as that between the REG and CCE of the second SS.

62. The method of any one of claims 35 to 60, wherein the time domain unit where the first SS is located is the SBFD time domain unit, and the time domain unit where the second SS is located is the non-SBFD time domain unit.

63. A method for processing a time-frequency resource of a physical downlink control channel (PDCCH) candidate, comprising:

executing, by a terminal, the method of any one of claims 1 to 31; and
executing, by an access network device, the method of any one of claims 32 to 62.

64. A terminal, comprising:

a receiving module, configured to receive first information, wherein the first information indicates time-frequency resources of a search space (SS) set, a time domain unit where one or more first SSs in the SS set are located is a subband full duplex (SBFD) time domain unit; and
a processing module, configured to determine a time-frequency resource of a PDCCH candidate comprised in the one or more first SSs based on the first information.

65. An access network device, comprising:
a sending module, configured to send first information, wherein the first information at least indicates a time-frequency resource of a PDCCH candidate comprised in a search space (SS) set; a time domain unit where one or more first SSs in the SS set are located is a subband full duplex (SBFD) time domain unit.

66. A communication device, comprising:

one or more processors;
wherein the processor is configured to call instructions to enable the communication device to execute the method for processing a time-frequency resource of a physical downlink control channel (PDCCH) candidate of any one of claims 1 to 31 or 32 to 62.

67. A storage medium for storing instructions, wherein, when the instructions are executed on a communication device, the communication device is caused to execute the method for processing a time-frequency resource of a physical downlink control channel (PDCCH) candidate of any one of claims 1 to 31 or 32 to 62.

FIG. 1A

FIG. 1B

FIG. 1C

FIG. 1D

| PDCCH | PDCCH candidate#1 | | | | | | PDCCH candidate#2 | | | | | | PDCCH candidate#3 | | | | | |
|---|---|---|---|---|---|---|---|---|---|---|---|---|---|---|---|---|---|---|
| CCE index | 0 | | | 1 | | | 2 | | | 3 | | | 4 | | | 5 | | |
| REG bundle index (origin) | 0 | 1 | 2 | 3 | 4 | 5 | 6 | 7 | 8 | 9 | 10 | 11 | 12 | 13 | 14 | 15 | 16 | 17 |
| REG bundle index (interleaved) | 0 | 6 | 12 | 1 | 7 | 13 | 2 | 8 | 14 | 3 | 9 | 15 | 4 | 10 | 16 | 5 | 11 | 17 |

FIG. 1E

FIG. 1F

| PDCCH | PDCCH candidate#1 | | PDCCH candidate#2 | | PDCCH candidate#3 | |
|---|---|---|---|---|---|---|
| CCE index | 0 | 1 | 2 | 3 | 4 | 5 |
| REG bundle index | 0 | 1 | 2 | 3 | 4 | 5 |

FIG. 1G

FIG. 1H

FIG. 1I

FIG. 1J

FIG. 1K

```
┌──────────────┐                                    ┌──────────────┐
│              │                                    │   Access     │
│   Terminal   │                                    │   network    │
│              │                                    │   device     │
└──────┬───────┘                                    └──────┬───────┘
       │              S2101: sending first information      │
       │◄───────────────────────────────────────────────────│
┌──────┴─────────────────────────┐                          │
│ S2102: determining the time-   │                          │
│ frequency resources of the PDCCH│                         │
│ candidates included in the first SS│                      │
│ based on the first information.│                          │
└──────┬─────────────────────────┘                          │
┌──────┴─────────────────────────┐                          │
│ S2103: determining the time-   │                          │
│ frequency resource of the PDCCH│                          │
│ candidate included in the second SS│                      │
│ based on the first information │                          │
└──────┬─────────────────────────┘                          │
       │                                                    │
```

FIG. 2

```
┌─────────────────────────────────────────┐
│  S3101: receiving first information       │
└───────────────────┬───────────────────────┘
                    ▼
┌─────────────────────────────────────────┐
│ S3102: determining a time-frequency      │
│ resources of a PDCCH candidate           │
│ included in the first SS based on the first│
│ information.                             │
├─────────────────────────────────────────┤
│ S3103: determining a time-frequency      │
│ resource of a PDCCH candidate included   │
│ in the second SS based on the first      │
│ information                              │
└─────────────────────────────────────────┘
```

FIG. 3

```
┌─────────────────────────────────────────┐
│  S4101: sending first information         │
└─────────────────────────────────────────┘
```

FIG. 4

```
┌─────────────────────────────────────┐
│            Terminal                  │
│  ┌─────────────────────────────────┐ │
│  │  receiving module 501           │ │
│  └─────────────────────────────────┘ │
│  ┌─────────────────────────────────┐ │
│  │  processing module 502          │ │
│  └─────────────────────────────────┘ │
└─────────────────────────────────────┘
```

FIG. 5

access network device

sending module 601

FIG. 6

**8100**

FIG. 7

**chip 8200**

FIG. 8

## INTERNATIONAL SEARCH REPORT

International application No.

**PCT/CN2023/107797**

### A. CLASSIFICATION OF SUBJECT MATTER

H04W 72/0446(2023.01)i

According to International Patent Classification (IPC) or to both national classification and IPC

### B. FIELDS SEARCHED

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS; CNTXT; CNKI; VEN; USTXT; EPTXT; WOTXT; 3GPP: 候选, 监测, 全双工, 子带, 物理下行控制信道, 搜索空间, 控制资源集, 配置, candidate, monitor, SBFD, subband, PDCCH, search space, CORESET, configure

### C. DOCUMENTS CONSIDERED TO BE RELEVANT

| Category* | Citation of document, with indication, where appropriate, of the relevant passages | Relevant to claim No. |
|---|---|---|
| X | CN 115918014 A (QUALCOMM INC.) 04 April 2023 (2023-04-04) description, paragraphs [0064]-[0169] | 1-67 |
| X | WO 2023043683 A1 (INTERDIGITAL PATENT HOLDINGS INC.) 23 March 2023 (2023-03-23) description, paragraphs [0038]-[0135] and [0198]-[0222] | 1-67 |
| A | CN 116235611 A (BEIJING XIAOMI MOBILE SOFTWARE CO., LTD.) 06 June 2023 (2023-06-06) entire document | 1-67 |
| A | QUALCOMM INC. "Feasibility and Techniques for Subband Non-overlapping Full Duplex" *3GPP TSG RAN WG1 Meeting #112bis-e, R1-2303589*, 08 April 2023 (2023-04-08), entire document | 1-67 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **18 March 2024** | **21 March 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/107797**

| Patent document cited in search report | | | Publication date (day/month/year) | Patent family member(s) | | | Publication date (day/month/year) |
|---|---|---|---|---|---|---|---|
| CN | 115918014 | A | 04 April 2023 | US | 2021400654 | A1 | 23 December 2021 |
| | | | | US | 11723028 | B2 | 08 August 2023 |
| | | | | EP | 4169198 | A1 | 26 April 2023 |
| | | | | WO | 2021257241 | A1 | 23 December 2021 |
| WO | 2023043683 | A1 | 23 March 2023 | TW | 202316830 | A | 16 April 2023 |
| CN | 116235611 | A | 06 June 2023 | None | | | |

Form PCT/ISA/210 (patent family annex) (July 2022)